# EUROPÄISCHE PATENTANMELDUNG

(11) **EP 1 100 026 A1**
(43) Veröffentlichungstag der Anmeldung: **16.05.2001**
(21) Anmeldenummer: 99120938.8
(22) Anmeldetag: 02.11.1999
(51) Int. Cl.: G06F 17/30

(54) **Verfahren zum Zugriff auf eine Speichereinheit sowie zugehörige Datenverarbeitungsanlagen und Programme**

(71) Anmelder: SIEMENS AKTIENGESELLSCHAFT, 80333 München (DE)
(72) Erfinder: Eisenhauer, Friedrich, 81371 München (DE)

(57) **Zusammenfassung**

Erläutert wird unter anderem ein Verfahren zum Zugriff auf eine Speichereinheit, bei dem Beschreibungsdatensätze (MOCDE) verwendet werden, um Daten gemäß einem äußeren Datenmodell in Daten gemäß einem inneren Datenmodell umzuwandeln. Außerdem werden zur Umwandlung der Daten Variantendatensätze (PCV-V1, PCV-V2) verwendet, in denen Angaben über Varianten von Datenstrukturen gemäß äußerem Datenmodell enthalten sind. In Umwandlungsdatensätzen (ACC-0) sind Angaben gespeichert, mit deren Hilfe Attributwerte gemäß äußerem Datenmodell in Attributwerte gemäß innerem Datenmodell umgewandelt werden können.

## Beschreibung

Die Erfindung betrifft Verfahren zum Zugriff auf eine Speichereinheit, in der innere Datensätze gespeichert sind. Die inneren Datensätze haben eine Datenstruktur, die durch ein inneres Datenmodell vorgegeben ist.

Das innere Datenmodell ist für die Bedürfnisse eines bestimmten Herstellers besonders gut geeignet und weicht meist von einem äußeren Datenmodell ab, das beispielsweise ein Kompromiß zwischen den inneren Datenmodellen verschiedener Hersteller ist und auf das sich die verschiedenen Hersteller geeinigt haben. Ein solches äußeres Datenmodell ist beispielsweise aus Standards der International Telecommunication Union (ITU) bekannt. Die Standards der X.700 Reihe legen das äußere Datenmodell fest. Im Zusammenhang mit den erläuterten Verfahren sind die folgenden Standards der ITU relevant:
- X.208 "Abstract Syntax Notation One",
- X.720 "Management Information Model",
- X.721 "Definitions of Management Information",
- X.722 "Guidelines for Definition of Managed Object", und
- M.3100 "Generic Network Information Model".

Darüber hinaus sind weitere Datenmodelle für bestimmte Anwendungsbereiche festgelegt, z.B. im Standard Q.751 und in den Standardisierungen der ETSI (European Telecommunications Standards Institute).

Angaben darüber, ob und wie eine Anpassung zwischen innerem Datenmodell und äußerem Datenmodell erfolgen soll, sind den genannten Standards nicht zu entnehmen. Eine Möglichkeit besteht darin, das äußere Datenmodell identisch als inneres Datenmodell zu übernehmen. Dies hat jedoch den Nachteil, daß der Hersteller möglicherweise mit für ihn ungünstigen Datenstrukturen arbeiten muß.

Es ist Aufgabe der Erfindung, einfache Verfahren zum Zugriff auf eine Speichereinheit anzugeben, mit denen Anpassungen zwischen voneinander abweichendem äußerem Datenmodell und innerem Datenmodell durchgeführt werden können. Außerdem sollen Datenverarbeitungsanlagen und Programme angegeben werden, mit deren Hilfe die erfindungsgemäßen Verfahren durchzuführen sind.

Die die Verfahren betreffende Aufgabe wird durch ein Verfahren mit den im Patentanspruch 1 angegeben Verfahrensschritten gelöst. Weiterbildungen sind in den Unteransprüchen angegeben.

Beim Verfahren gemäß Patentanspruch 1 wird von der Überlegung ausgegangen, daß gemäß äußerem Datenmodell für äußere Datensätze zwar ein äußeres Namensschema vorgegeben ist, mit dessen Hilfe ein äußerer Datensatz eindeutig durch die Angabe übergeordneter äußerer Datensätze bezeichnet werden kann, das jedoch in Anforderungen, die an die Datenverarbeitungsanlage gestellt werden, nur Namensattribute gemäß äußerem Datenmodell enthalten sind. Die Namensattribute erlauben es ebenfalls, einen bestimmten äußeren Datensatz durch die Angabe der Namensattribute übergeordneter äußerer Datensätze zu bezeichnen. Jedoch ist die Bezeichnung durch Namensattribute nicht eindeutig, wenn das äußere Datenmodell das Verwenden gleicher Namensattribute in verschiedenen Datenstrukturen zuläßt. Beispielsweise sind im Datenmodell gemäß der Standardserie X.700 gleiche Namensattribute in verschiedenen Objektklassen und damit in verschiedenen Datenstrukturen zulässig. In anderen äußeren Datenmodellen, z.B. gemäß dem Protokoll SNMP (Simple Network Management Protocol) ist auch die Bezeichnung mit Hilfe von Namensattributen eindeutig.

Beim erfindungsgemäßen Verfahren wird für verschiedene Positionen im äußeren Namensschema jeweils ein Beschreibungsdatensatz gespeichert, der Angaben für den Zugriff auf innere Datensätze und Angaben über die seine Position im Namensschema angebenden Namensattribute enthält. Es werden diejenigen Beschreibungsdatensätze ermittelt, deren Namensattribute mit den in der Anforderung angegebenen Namensattributen übereinstimmen. Mit Hilfe der Angaben für den Zugriff, die in einem ermittelten Beschreibungsdatensatz enthalten sind, und mit Hilfe von in der Anforderung enthaltenen Angaben wird eine Lesezugriff auf die Speichereinheit durchgeführt. Für die Bearbeitung der Anforderung wird derjenige Beschreibungsdatensatz ausgewählt, zu dem ein innerer Datensatz ermittelt wurde, d.h. für den ein erfolgreicher Lesezugriff durchgeführt worden ist.

Die Angaben für den Zugriff auf innere Datensätze erlauben es, das innere Datenmodell anders zu wählen als das äußere Datenmodell. Die Übereinstimmung des äußeren Datenmodells und des inneren Datenmodells besteht darin, daß es für jede Position im Namensschema des äußeren Datenmodells einen Beschreibungsdatensatz gibt, mit dessen Hilfe die abweichenden inneren Datensätze ermittelt werden können.

Beim Speichern der inneren Datensätze wird darauf geachtet, daß gleiche Namensattribute unterschiedliche Werte haben. Somit lassen sich zwar gleiche Namensattribute für die Bezeichnung unterschiedlicher Datenstrukturen verwenden, jedoch ist der Wert der Namensattribute unterschiedlich. Durch diese Maßnahme wird gewährleistet, daß immer genau ein Beschreibungsdatensatz ausgewählt wird. Der ausgewählte Beschreibungsdatensatz zeigt auf einen inneren Datensatz, der Daten desjenigen äußeren Datensatzes enthält, auf den in der Anforderung Bezug genommen wird.

Bei einer Weiterbildung enthalten Beschreibungsdatensätze ein Verweisdatum, falls sie Datenstrukturen betreffen, die nicht an einer Endposition im Namensschema angeordnet sind. Das Verweisdatum verweist auf einen Beschreibungsdatensatz, dessen Position im Namensschema unmittelbar oberhalb der Position des das Verweisdatum enthaltenden Beschreibungsdatensatzes liegt. Das Verweisdatum ermöglicht es, sogenannte ERZEUGE-Anforderungen zu bearbeiten, bei denen nur die Namensattribute einer übergeordneten Klasse angegeben werden. Wurde der Beschreibungsdatensatz für die übergeordnete Datenstruktur ausgewählt, so kann mit Hilfe einer Filterbedingung gemäß der das Verweisdatum des Beschreibungsdatensatzes auf den ausgewählten Beschreibungsdatensatz verweisen muß, der untergeordnete Beschreibungsdatensatz ermittelt werden.

Bei einer nächsten Weiterbildung ist gemäß einem inneren Datenmodell für die inneren Datensätze ein inneres Namensschema vorgegeben, mit dessen Hilfe ein innerer Datensatz durch die Angabe übergeordneter innere Datensätze bezeichnet werden kann. Soll eine äußere Datenstruktur durch mehrere innere Datenstrukturen bzw. Datensätze dargestellt werden, so betreffen die Angaben in einem Beschreibungsdatensatz mehrere innere Datensätze. Werden dagegen mehrere äußere Datensätze durch einen gemeinsamen inneren Datensatz dargestellt, so betreffen die Angaben in verschiedenen Beschreibungsdatensätzen denselben inneren Datensatz. Die Weiterbildung ermöglicht es, zweckmäßige Abweichungen zwischen innerem Datenmodell und äußerem Datenmodell zu handhaben.

Bei einer nächsten Weiterbildung enthalten die äußeren Datensätze äußere Attributwerte und die inneren Datensätze innere Attributwerte. Mit Hilfe eines Beschreibungsdatensatzes werden äußere Attributwerte in innere Attributwerte umgewandelt. Andererseits lassen sich mit Hilfe eines Beschreibungsdatensatzes auch innere Attributwerte in äußere Attributwerte umwandeln. Durch das Umwandeln der Attributwerte lassen sich beispielsweise andere Wertebereiche für äußere und innere Attribute nutzen. Die Umwandlung kann jedoch auch darin bestehen, daß die inneren Attributwerte abhängig von bestimmten bei der Bearbeitung der Anforderung vorhandenen Bedingungen jedes Mal neu berechnet werden.

Die oben angegebene Aufgabe wird weiterhin durch ein Verfahren mit den im Patentanspruch 7 genannten Verfahrensschritten gelöst. Weiterbildungen sind in den Unteransprüchen angegeben.

Dem Verfahren gemäß Patentanspruch 7 liegt die Erkenntnis zugrunde, daß gemäß äußerem Datenmodell eine Vielzahl von Varianten mit verschiedenen Attributen für eine Datenstruktur an einer Position eines äußeren Namensschemas auftreten kann. Die Zahl der erlaubten Varianten berechnet sich gemäß den Gesetzen der Kombinatorik, so daß bei n-Varianten 2ⁿ Möglichkeiten der Kombination bestehen. Tatsächlich werden aber nur sehr wenige Kombinationen verwendet.

Deshalb wird für verschiedene Varianten einer Datenstruktur jeweils ein Variantendatensatz gespeichert, der Angaben über die Attribute der Variante enthält. Werden nur für ausgesuchte Varianten Variantendatensätze gespeichert, so wird eine große Zahl theoretisch möglicher Varianten auf eine kleine Zahl tatsächlich verwendeter Varianten reduziert.

Vor der Bearbeitung der an die Datenverarbeitungsanlage gestellten Anforderung wird ein Variantendatensatz mit Hilfe eines Vergleichs der in der Anforderung enthaltenen Attribute und der im Variantendatensatz enthaltenen Attribute durchgeführt. Dabei muß nicht auf interne Datensätze zugegriffen werden, weil der Vergleich nur die Attribute, d.h. die Attributbezeichner, und nicht die Attributwerte betrifft. Somit läßt sich der Vergleich schnell durchführen.

Die Anforderung wird unter Verwendung des ausgewählten Variantendatensatzes bearbeitet, wobei auf einen inneren Datensatz zugegriffen wird. Beim Bearbeiten einer ERZEUGE-Anforderung wird ein innerer Datensatz gespeichert.

Bei einer Weiterbildung enthält der ausgewählte Variantendatensatz selbst Angaben für den Zugriff auf den inneren Datensatz. Alternativ werden für verschiedene Positionen im äußeren Namensschema jeweils Beschreibungsdatensätze gespeichert, die Angaben für den Zugriff auf die inneren Datensätze enthalten. Ein Variantendatensatz enthält ein Verweisdatum, das auf den Beschreibungsdatensatz verweist, der die gleiche Position im Namensschema hat wie die Datenstruktur, deren Variante durch den Variantendatensatz bezeichnet ist. Durch diese Maßnahme läßt sich Speicherplatz einsparen, da für verschiedene Varianten einer Datenstruktur mit einer bestimmten Position im Namensschema dieselben Angaben verwendet werden und nur einmal im Beschreibungsdatensatz gespeichert werden müssen.

Enthält bei einer Weiterbildung der Variantendatensatz ein Prioritätsdatum, das eine Priorität angibt, und wird ein Variantendatensatz an Hand des Prioritätsdatums ausgewählt, so läßt sich die Auswahl der Variantendatensätze zusätzlich beeinflussen. Bei einer anderen Weiterbildung wird der Variantendatensatz ausgewählt, der die meisten Attribute mit den Attributen der Anforderung gemeinsam hat.

Die oben angegebene Aufgabe wird auch durch ein Verfahren mit den im Patentanspruch 14 angegebenen Verfahrensschritten gelöst. Weiterbildungen sind in den Unteransprüchen angegeben.

Gemäß diesem Verfahren bearbeitet die Datenverarbeitungsanlage eine Anforderung, in der äußere Attributwerte für gemäß äußerem Datenmodell festgelegte Attribute enthalten sind. Für die inneren Datensätze sind innere Attribute gemäß innerem Datenmodell festgelegt. Die inneren Datensätze werden wiederum in einer digitalen Speichereinheit gespeichert. Bei dem erfindungsgemäßen Verfahren werden Umwandlungsdatensätze gespeichert, die für äußere Attribute Angaben enthalten, welche inneren Attribute zur Speicherung der Attributwerte verwendet werden und wie die Werte der inneren Attribute aus den Werten der äußeren Attribute zu erzeugen sind. Durch diese Maßnahmen lassen sich beispielsweise die Wertebereiche von inneren und äußeren Attributen verschieben. Für äußere Attribute, deren Werte direkt als Werte für innere Attribute übernommen werden, muß im betreffenden Umwandlungsdatensatz kein Eintrag gespeichert werden. Fehlt ein Eintrag für ein äußeres Attribut, so bedeutet dies, daß keine Umwandlung durchzuführen ist.

Bei einer Weiterbildung sind in den Umwandlungsdatensätzen nur Verweise auf Programmbausteine enthalten, bei deren Ausführung durch einen Prozessor der betreffende Attributwert umgewandelt wird. Dieses Vorgehen erlaubt es, das Umwandeln in ein Anwenderprogramm auszulagern.

Die oben angegebene Aufgabe wird auch durch ein Verfahren gemäß Patentanspruch 18 gelöst. Weiterbildungen sind in den Unteransprüchen angegeben.

Beim Verfahren gemäß Patentanspruch 18 wird davon ausgegangen, daß auf die inneren Datensätze erst dann zugegriffen werden kann, wenn bekannt ist, welche Datenfelder sie enthalten, d.h. welche Datenstruktur sie haben. Diese Datenstruktur ist zusätzlich zu einem inneren Kennzeichen anzugeben, das im inneren Datensatz gespeichert ist, um einen Zugriff auf die Speichereinheit durchzuführen.

Beim erfindungsgemäßen Verfahren werden die inneren Kennzeichenwerte zusätzlich separat vom bezeichneten inneren Datensatz in einem Zugriffsdatensatz gespeichert, mit dessen Hilfe sich die Datenstruktur des inneren Datensatzes ermitteln läßt. Die Datenstruktur der Zugriffsdatensätze ist einheitlich vorgegeben. Beim Zugriff auf einen inneren Datensatz wird zunächst mit Hilfe des inneren Kennzeichens im Zugriffsdatensatz die Datenstruktur des durch das Kennzeichen bezeichneten inneren Datensatzes ermittelt. Erst danach wird mit Hilfe des inneren Kennzeichens und der ermittelten Datenstruktur auf den inneren Datensatz zugegriffen. Durch diese Vorgehensweise ist ein einfaches Verfahren gegeben, um mit Hilfe des Kennzeichens schnell auf den zugehörigen inneren Datensatz zuzugreifen. Wäre die Struktur des inneren Datensatzes nicht mit Hilfe des Zugriffsdatensatzes zu ermitteln, so müßten für alle in der Speichereinheit verwendeten Datenstrukturen Testzugriffe mit dem Kennzeichen erfolgen. Nur ein einziger dieser Testzugriffe würde ohne Fehlermeldung verlaufen. Demzufolge führt das erfindungsgemäße Verfahren zu einem sehr effizienten Zugriff, bei dem auf die Speichereinheit Zugriffe vermieden werden, die eine Fehlermeldung zur Folge haben.

Das erfindungsgemäße Verfahren läßt sich insbesondere dann einsetzen, wenn ein inneres Datenmodell verwendet wird, das von einem äußeren Datenmodell abweicht. Die Abweichung besteht hier in der Art der Bezeichnung von Datensätzen gemäß äußerem Datenmodell und gemäß innerem Datenmodell. Gemäß äußerem Datenmodell ist für äußere Datensätze ein Namensschema vorgegeben, mit dessen Hilfe ein äußerer Datensatz durch die Angabe von Kennzeichen übergeordneter äußerer Datensätze bezeichnet wird. Die inneren Kennzeichen haben keinen Bezug zu übergeordneten Datensätzen. Beispielsweise werden fortlaufende Ganzzahlwerte als innere Kennzeichen verwendet. Durch eine Umwandlung der Kennzeichen gemäß Namensschema in innere Kennzeichen und in umgekehrte Richtung kann auf einfache Art eine Anpassung zwischen den beiden Datenmodellen erfolgen.

Außerdem werden für Verweise, für die gemäß äußerem Datenmodell ebenfalls das Namensschema verwendet wird, im inneren Datenmodell die inneren Kennzeichen verwendet. Läßt das äußere Datenmodell z.B. Buchstabenzeichen zu, so vereinfacht sich die Bearbeitung einer Anforderung, wenn aufgrund der inneren Kennzeichen nur Ganzzahlwerte verarbeitet werden müssen.

Bei einer Weiterbildung des erfindungsgemäßen Verfahrens ist für die inneren Datensätze gemäß einem inneren Datenmodell ein Namensschema vorgegeben, mit dessen Hilfe ein innerer Datensatz durch die Angabe von Kennzeichen übergeordneter innerer Datensätze bezeichnet wird. Somit steht eine zweite Art der Kennzeichnung innerer Datensätze zur Verfügung, die im Gegensatz zu den inneren Kennzeichen sehr stark an das äußere Datenmodell angelehnt ist. Dies erleichtert die Bearbeitung bestimmter Anforderungen.

Hat das innere Datenmodell andere Namensbeziehung als das äußere Datenmodell und/oder haben die Datensätze für einander entsprechende Positionen innerhalb des Namensschemas voneinander abweichende Datenstrukturen, so kann das innere Datenmodell unabhängig vom äußeren Datenmodell frei gewählt werden.

Die erfindungsgemäßen Verfahren erlauben es, ein inneres Datenmodell vorzugeben, das sich vom äußeren Datenmodell beträchtlich unterscheidet. Insbesondere kann das innere Datenmodell so gewählt werden, daß ein Datenbanksystem, mit dessen Hilfe die Zugriffe auf die Speichereinheit erfolgen, nicht geändert zu werden braucht, um Anforderungen gemäß äußerem Datenmodell zu bearbeiten. Andererseits kann die Entwicklung des Datenbanksystems relativ unabhängig von Vorgaben erfolgen, die durch das äußere Datenmodell entstehen.

Die Verfahren werden mit Hilfe von Datenverarbeitungsanlagen und Programmen ausgeführt, wie sie in den unabhängigen Ansprüchen beansprucht sind. Somit gelten die für die jeweiligen Verfahren genannten technischen Wirkungen auch für die zugehörige Datenverarbeitungsanlage und das zugehörige Computerprogramm.

Im folgenden werden Ausführungsbeispiele der Erfindung an Hand der beiliegenden Zeichnungen erläutert. Darin zeigen:
- Figur 1: einen Teil der Steuereinheiten einer Vermittlungsstelle,
- Figur 2: ein äußeres Datenmodell und ein inneres Datenmodell für den Betrieb der Vermittlungsstelle,
- Figur 3: Objektklassen zur Beschreibung des inneren Datenmodells,
- Figur 4: die Darstellung von Definitions-Paketen und Paketvarianten,
- Figur 5: Instanzen der Objektklassen zur Beschreibung des inneren Datenmodells und Instanzen einer Objektklasse C-R,
- Figur 6: Instanzen der Objektklassen zur Beschreibung des inneren Datenmodells und Instanzen einer Objektklasse E-R,
- Figur 7: die Datenfelder einer Paketvarianten-Objektklasse,
- Figur 8: die Datenfelder einer Beschreibungs-Objektklasse,
- Figur 9: eine Tabelle zum Festlegen von Bezügen zwischen Instanzen der Beschreibungs-Objektklasse,
- Figur 10: die Datenfelder einer Attribut-Umwandlungs-Objektklasse,
- Figuren 11A, 11B: Verfahrensschritte, die zur Auswahl einer Instanz der Beschreibungs-Objektklasse ausgeführt werden,
- Figuren 12A, 12B: Verfahrensschritte, die bei der Bearbeitung einer LESE-Anforderung ausgeführt werden,
- Figuren 13A bis 13D: ein Flußdiagramm mit Verfahrensschritten, die bei der Bearbeitung einer ERZEUGE-Anforderung durchgeführt werden.

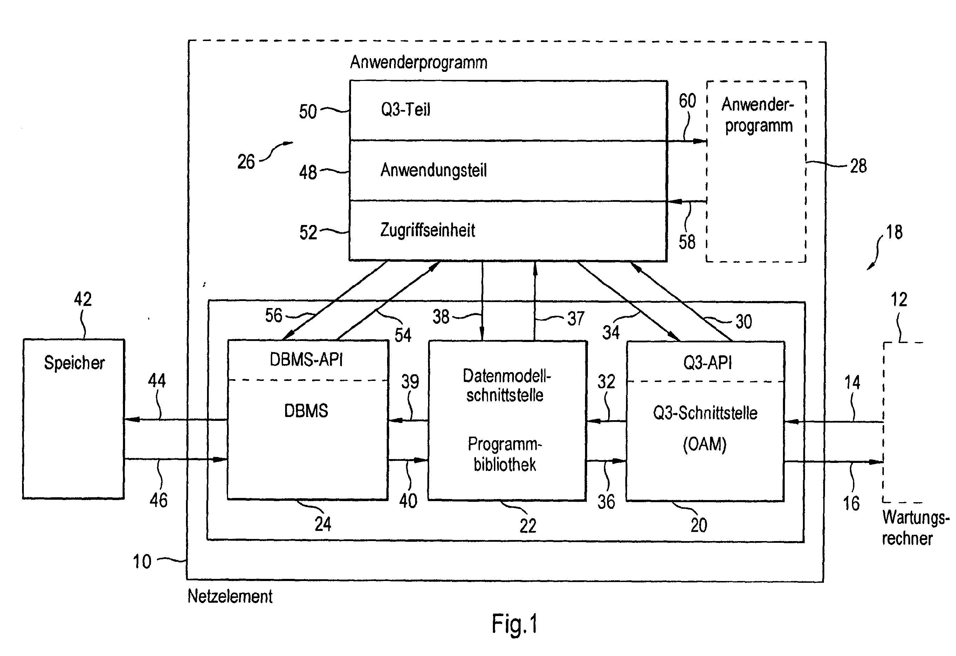

Figur 1 zeigt einen Teil der Steuereinheiten einer Vermittlungsstelle 10, die auch als Netzelement bezeichnet wird. Die Vermittlungsstelle 10 dient in einem Telekommunikationsnetz zum Herstellen von Verbindungen zwischen Teilnehmern, die an die Vermittlungsstelle 10 bzw. an weitere nicht dargestellte Vermittlungsstellen des Telekommunikationsnetzes angeschlossen sind. Die Vermittlungsstelle 10 wird von einem Wartungsrechner 12 aus gewartet, wobei beispielsweise neue Teilnehmer eingerichtet werden. Vom Wartungsrechner 12 aus können Wartungsbefehle über eine Übertragungsstrecke 14 zur Vermittlungsstelle 10 gesendet werden. Über eine Übertragungsstrecke 16 gelangen Bestätigungen der Wartungsbefehle von der Vermittlungsstelle 10 zum Wartungsrechner 12. Der Wartungsrechner 12 ist meist mehrere Kilometer von der Vermittlungsstelle 10 aufgestellt und bildet mit den Übertragungsstrecken 14, 16 ein Wartungsnetz 18, zu dem weitere Übertragungsstrecken und Netzelemente gehören (nicht dargestellt).

In einem nicht dargestellten Speicher der Vermittlungsstelle 10 sind die Programmbefehle der Programme zur Steuerung der Vermittlungsstelle 10 gespeichert. Die Programmbefehle werden von einem oder mehreren Prozessoren ausgeführt. Zum Ausführen von Grundfunktionen bei der Steuerung der Vermittlungsstelle 10 gibt es ein Schnittstellenprogramm 20, ein Datenformatierungsprogramm 22 und ein Datenbank-Zugriffsprogramm 24. Die Programme 20 bis 24 für die Grundfunktionen werden von Anwenderprogrammen verwendet, von denen in Figur 1 zwei Anwenderprogramme 26 und 28 dargestellt sind, welche unterschiedliche Funktionen zur Steuerung der Vermittlungsstelle ausführen.

Das Schnittstellenprogramm 20 bildet die Schnittstelle zwischen Vermittlungsstelle 10 und Wartungsnetz 18 und wird auch als OAM-Schnittstelle bezeichnet (Abkürzung für die englischen Begriffe: Operation, Administration, Maintenance). Die Schnittstelle 20 bearbeitet Wartungsbefehle, die über die Übertragungsstrecke 14 gemäß dem bekannten Q3-Protokoll übertragen werden. Dieses Protokoll ist im ITU-Standard X.711 standardisiert und unter dem Namen CMIP bekannt (englisch als common management information protocol bezeichnet). Das Schnittstellenprogramm 20 wandelt die über die Übertragungsstrecke 14 empfangenen Wartungsbefehle in innere Nachrichten um, die entweder an eines der Anwenderprogramme 26, 28 oder an das Datenformatierungsprogramm 22 weitergeleitet werden, vgl. Pfeile 30 und 32. Auf der anderen Seite werden innere Nachrichten, die von den Anwenderprogrammen 26, 28 oder von dem Datenformatierungsprogramm 22 an das Schnittstellenprogramm 20 gesendet werden, vgl. Pfeile 34 und 36, mit Hilfe des Schnittstellenprogramms 20 vom inneren Format in das Format gemäß Q3-Protokoll umgewandelt. Anschließend werden diese Nachrichten vom Schnittstellenprogramm 20 über die Übertragungsstrecke 16 zum Wartungsrechner 12 gesendet.

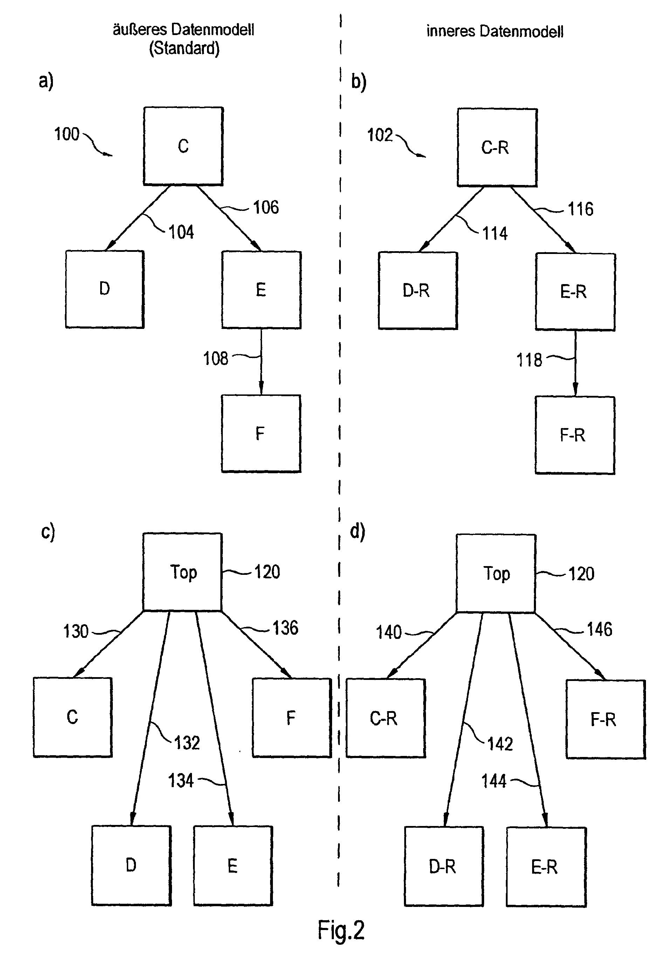

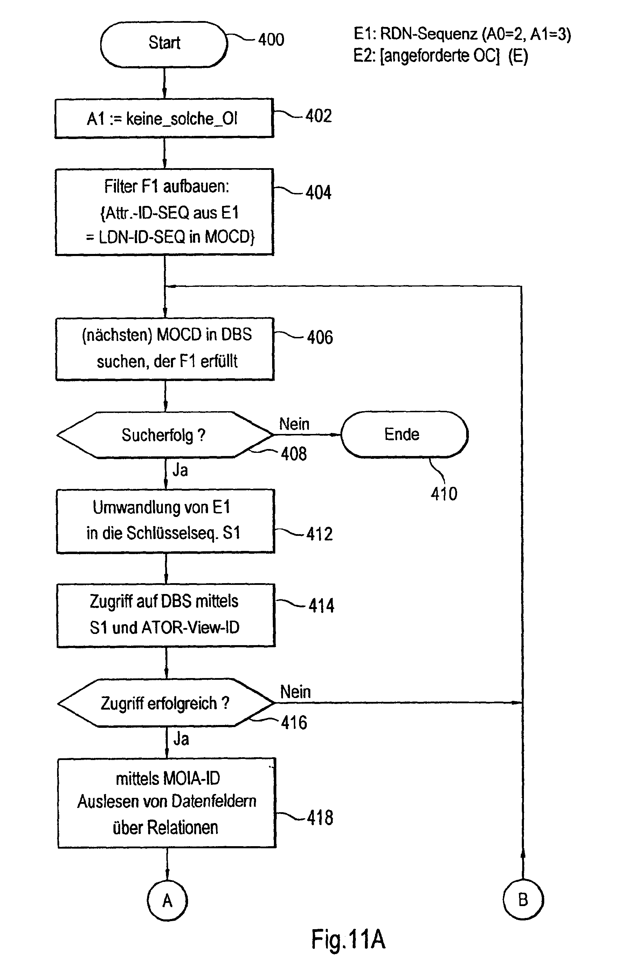

Zum Datenformatierungsprogramm 22 werden von dem Schnittstellenprogramm 20 diejenigen Wartungsbefehle des Wartungsrechners 12 weitergeleitet, bei denen das Datenformat vom Datenformat gemäß einem äußeren Datenmodell in ein Datenformat gemäß einem innerhalb der Vermittlungsstelle 10 geltenden Datenmodell umgewandelt werden müssen. Ein Beispiel für ein inneres Datenmodell und ein äußeres Datenmodell wird unten an Hand der Figur 2 erläutert. Die Abläufe im Datenformatierungsprogramm 22 werden unten an Hand der Figuren 11A bis 11E genauer erläutert. Beim Formatieren der Daten arbeitet das Datenformatierungsprogramm 22 eng mit den Anwenderprogrammen 26 und 28 zusammen, vgl. Pfeile 37 und 38. Außerdem wird die Datenformatierung vom Datenformatierungsprogramm 22 unter Zuhilfenahme des Datenbank-Zugriffsprogramms 24 durchgeführt, vgl. Pfeile 39, 40. So werden mit Hilfe des Datenbank-Zugriffsprogramms 24 Daten aus einem Datenspeicher 42 gelesen bzw. in den Datenspeicher 42 geschrieben, vgl. Pfeile 44, 46. Der Datenspeicher 42 kann sich sowohl innerhalb als auch außerhalb der Vermittlungsstelle 10 befinden. Das Datenbank-Zugriffsprogramm 24 ist ein Programm des Herstellers der Vermittlungsstelle 10 oder ein marktübliches Datenbank-Programm, z.B. das Datenbank-Programm INFORMIX oder ORACLE.

Das Anwenderprogramm 26 dient der Verbindungssteuerung beim Aufbau eines Telefongesprächs zwischen zwei Teilnehmern. Die dazu erforderlichen Befehle sind in einem Anwendungsteil 48 des Anwenderprogramms 26 gespeichert. Das Anwenderprogramm 26 enthält außerdem einen Programmteil 50 mit Befehlen, die beim Bearbeiten von Wartungsbefehlen ausgeführt werden, welche von der Schnittstelle 20 direkt an das Anwenderprogramm 26 weitergeleitet werden, bzw. welche vom Anwenderprogramm 26 zur Schnittstelle 20 gesendet werden, vgl. Pfeile 30 und 34. Außerdem enthält das Anwenderprogramm 26 eine Zugriffseinheit 52, die als Schnittstelle zwischen dem Anwenderprogramm 50 und den Programmen 20 bis 24 für die Grundfunktionen dient. Neben den bereits an Hand der Pfeile 30, 34, 37 und 38 erläuterten Zugriffen werden mit Hilfe der Zugriffseinheit 52 auch direkt Zugriffe auf das Datenbank-Zugriffsprogramm 24 durchgeführt, vgl. Pfeile 54 und 56.

Das Anwenderprogramm 26 arbeitet außerdem mit dem Anwenderprogramm 28 bzw. mit weiteren nicht dargestellten Anwenderprogrammen zusammen, vgl. Pfeile 58 und 60.

Figur 2 zeigt in einem Teil a ein Namensschema gemäß einem äußeren Datenmodell 100 und in einem Teil b ein Namensschema gemäß einem inneren Datenmodell 102. Das äußere Datenmodell 100 ist durch einen international gültigen Standard der ITU-T-X.700-Serie oder einem mit diesen Standards im Zusammenhang stehenden Standard vorgegeben. Für eine übersichtlichere Darstellung wird jedoch im folgenden ein stark vereinfachtes Datenmodell 100 beschrieben. Das Datenmodell 100 enthält eine Objektklasse C, die sich direkt von einer Basisklasse "Top" ableitet, aus der sich alle Objektklassen des äußeren Datenmodells 100 ableiten, vgl. Teil c der Figur 2. Die Objektklasse C ist die übergeordnete Klasse zu einer Objektklasse D, die andere Datenfelder als die Objektklasse C hat, vgl. Pfeil 104. Die Objektklasse D ist bezüglich der Objektklasse C eine untergeordnete Objektklasse.

Die Objektklasse C ist auch eine übergeordnete Objektklasse für eine Objektklasse E, vgl. Pfeil 106. Die Objektklasse E selbst ist eine untergeordnete Objektklasse zur Objektklasse C. Die Objektklasse E ist gleichzeitig auch eine übergeordnete Objektklasse für eine Objektklasse F, vgl. Pfeil 108.

Eine gestrichelte Linie 110 verdeutlicht die Trennung von äußerem Datenmodell 100 und innerem Datenmodell 102. Das innere Datenmodell 102 unterscheidet sich meist vom äußeren Datenmodell 100. Zur vereinfachten Darstellung der Vorgänge bei der Datenformatierung wird im folgenden jedoch zunächst angenommen, daß äußeres Datenmodell 100 und inneres Datenmodell 102 gleich sein. Die Objektklasse C des äußeren Datenmodells 100 wird im inneren Datenmodell 102 durch eine Objektklasse C-R repräsentiert. Ebenso gibt es zur äußeren Objektklasse D, E bzw. F innere Objektklassen D-R, E-R bzw. F-R. Die Objektklasse D-R ist der Objektklasse C-R und der Objektklasse E-R übergeordnet, vgl. Pfeil 114, 116. Die Objektklasse E-R ist der Objektklasse F-R übergeordnet, vgl. Pfeil 118. Beispielsweise kann das innere Datenmodell 102 dadurch vom äußeren Datenmodell 100 abweichen, daß die Objektklasse F des äußeren Datenmodells 100 durch zwei Objektklassen F1-R und F2-R des inneren Datenmodells 102 dargestellt wird.

Teil c der Figur 2 zeigt die sogenannten Vererbungsbeziehungen zwischen den Objektklassen C, D, E und F des äußeren Datenmodells 100. Eine Basisobjektklasse 120 enthält vier Basisattribute, nämlich die Attribute Objektklasse, allomorphe Klassen, Namensbindung und Pakete. Diese Attribute sind gemäß ITU-Standard X.720, Abschnitt 7, vorgegeben. Die Objektklassen C, D, E und F wurden aus der Basisobjektklasse 120 mit Hilfe eines Vererbung genannten Verfahrens abgeleitet, bei dem die abgeleitete Objektklasse sämtliche Attribute der Klasse enthält, aus der abgeleitet wird. Zusätzlich zu den vier genannten Attributen enthält die Objektklasse C weitere Attribute. Die Objektklassen D, E, und F enthalten jeweils andere zusätzliche Attribute. Die Vererbungsbeziehung wird durch Doppelpfeile 130 bis 136 verdeutlicht.

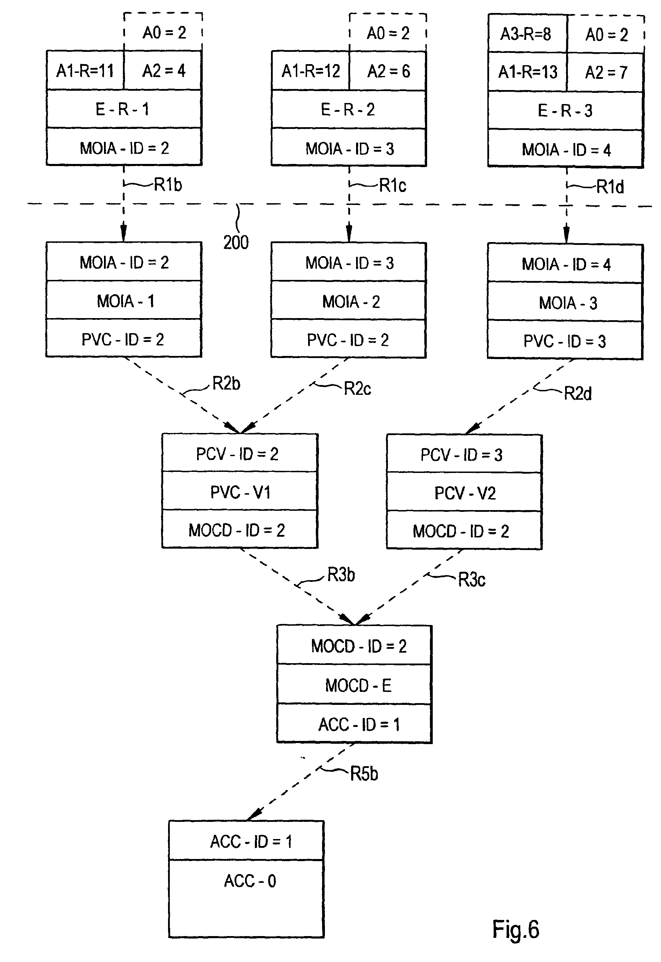

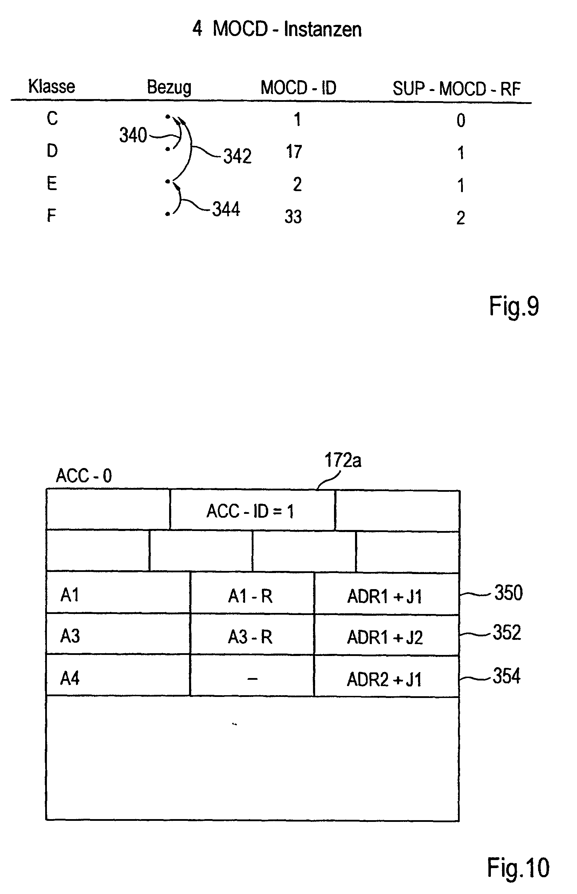

Teil d der Figur 2 zeigt die Vererbung für die Objektklassen C-R, D-R, E-R und F-R. Zur Vereinfachung der Erläuterung sei davon ausgegangen, daß diese Objektklassen ebenfalls von der Basisobjektklasse 120 mit Hilfe von Vererbung abgeleitet sind. Die Vererbung ist durch Doppelpfeile 140 bis 146 dargestellt. So enthält auch die Objektklasse C-R des inneren Datenmodells 102 zu den vier Attributen der Basisklasse 120 weitere Attribute. Die Attribute der Objektklasse C und der Objektklasse C-R stimmen nicht überein. Dies gilt ebenfalls für die Attribute der Objektklasse E und der Objektklasse E-R. Auf die Unterschiede zwischen den Attributen der Objektklasse E und der Objektklasse E-R wird weiter unten an Hand der Figuren 6 und 10 eingegangen.

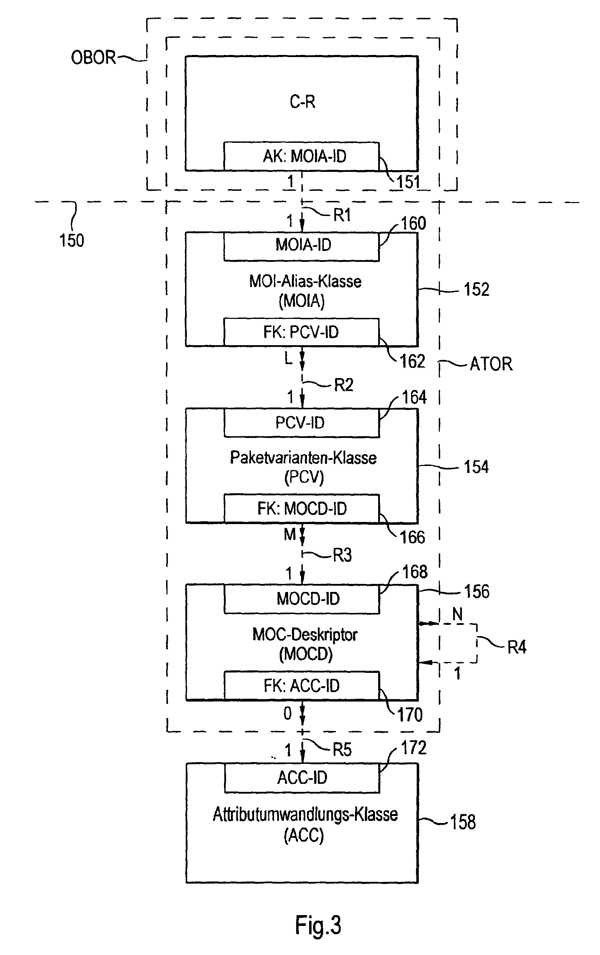

Figur 3 zeigt unterhalb einer gestrichelten Linie 150 eine Zugriffs-Objektklasse 152, eine Paketvarianten-Objektklasse 154, eine Beschreibungs-Objektklasse 156 und eine Attribut-Umwandlungs-Klasse 158. Die Objektklassen 152 bis 158 dienen der Beschreibung des inneren Datenmodells 102, vgl. Figur 2, Teil a. Deshalb handelt es sich bei den in Figur 3 dargestellten Beziehungen zwischen den Objektklassen 152 und 158 um ein Modell zur Beschreibung des inneren Datenmodells. Ein Modell, welches ein anderes Modell beschreibt, wird auch als Metamodell bezeichnet. Oberhalb der gestrichelten Linie 150 ist die Objektklasse C-R des inneren Datenmodells 102 dargestellt. Die Instanzen der Objektklasse C-R enthalten jeweils ein Datenfeld 151, in dem ein Kennzeichen MOIA-ID gespeichert wird, das zum Zugriff auf die jeweilige Instanz verwendet wird, weil es diese Instanz eindeutig kennzeichnet. Durch das Kennzeichen im Datenfeld 151 wird eine Relation R1 zu einer Instanz der Zugriffs-Objektklasse 152 hergestellt.

Die Zugriffs-Objektklasse 152 wird auch als MOIA-Objektklasse bezeichnet (Managed Object Instance Alias). Es gibt zwei Datenfelder 160 und 162 in Instanzen der Objektklasse 152. Im Datenfeld 160 wird ein Kennzeichen MOIA-ID gespeichert, welches die jeweilige Instanz eindeutig kennzeichnet, z.B. ein sogenannter Integer-Wert, d.h. ein Ganzzahlwert. Im Datenfeld 162 wird ein Schlüsselkennzeichen PCV-ID gespeichert, das es ermöglicht, eine Relation R2 zu einer Instanz der Paketvarianten-Objektklasse 154 anzugeben.

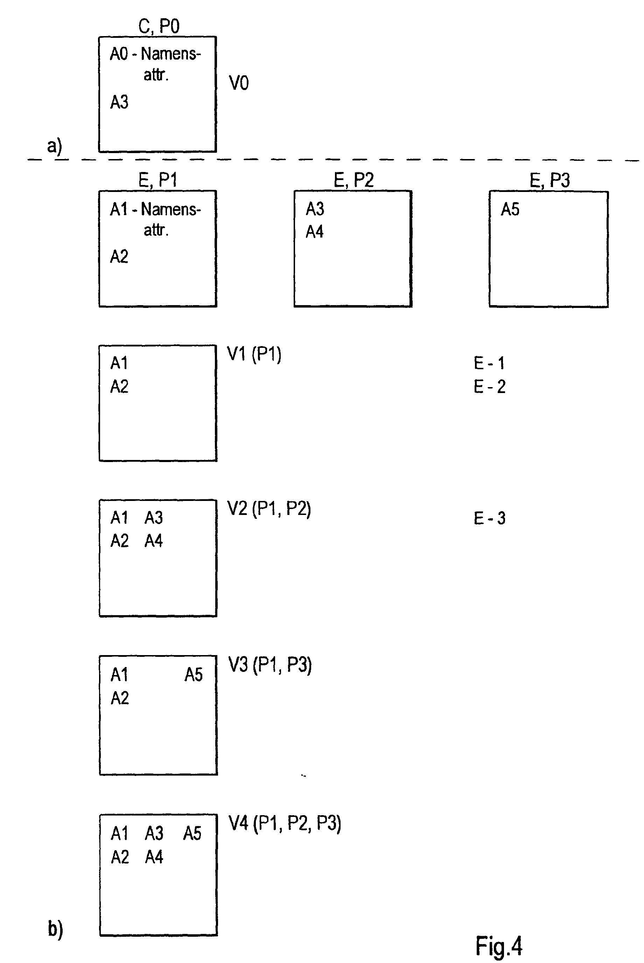

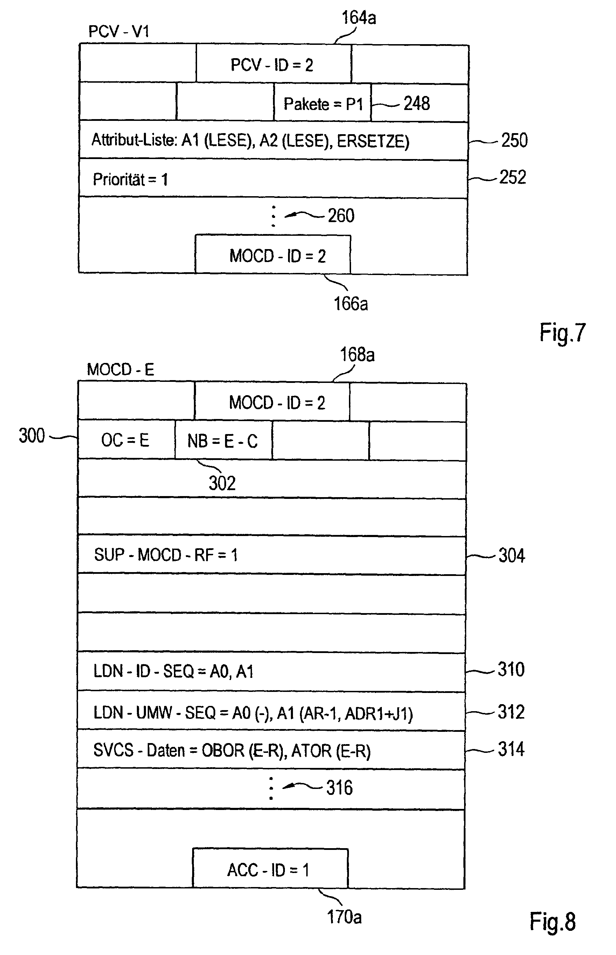

In der Paketvarianten-Objektklasse 154, die auch als PCV-Objektklasse bezeichnet wird (Package Configuration Variant), sind mehrere Datenfelder vorgegeben, von denen in Figur 3 zwei Datenfelder 164 und 166 dargestellt sind. Im Datenfeld 164 wird ein Kennzeichen PCV-ID gespeichert, das die jeweilige Instanz der Paketvarianten-Objektklasse 154 eindeutig kennzeichnet. Im Datenfeld 166 wird jeweils ein Kennzeichen MOCD-ID angegeben, mit dessen Hilfe eine Relation R3 zu einer Instanz der Beschreibungs-Objektklasse 156 angegeben wird. Die Bedeutung der Paketvarianten-Objektklasse 154 wird weiter unten an Hand der Figuren 4 bis 7 erläutert. Weitere Datenfelder der Objektklasse 154 werden unten an Hand der Figur 7 erläutert.

Die Beschreibungs-Objektklasse 156, auch als MOCD-Objektklasse bezeichnet (Managed Object Class Descriptor), enthält ebenfalls mehrere Datenfelder, von denen in Figur 3 zwei Datenfelder 168 und 170 dargestellt sind. Im Datenfeld 168 wird je Instanz ein Kennzeichen MOCD-ID gespeichert, das die Instanz der Objektklasse 156 eindeutig kennzeichnet. Im Datenfeld 170 wird ein Kennzeichen ACC-ID gespeichert, das eine Relation R5 zu einer Instanz der Attribut-Umwandlungs-Objektklasse 158 angibt. Die weiteren Datenfelder der Beschreibungs-Objektklasse werden unten an Hand der Figur 8 erläutert. Die Beschreibungs-Objektklasse 156 dient dazu, die Beziehungen der Objektklassen im äußeren Datenmodell 100 als Relationen R4 zu speichern.

Die Attribut-Umwandlungs-Objektklasse 158, auch ACC-Objektklasse genannt (Attribute Conversion Control), enthält mehrere Datenfelder, von denen in Figur 3 ein Datenfeld 172 dargestellt ist. Im Datenfeld 172 wird ein Kennzeichen ACC-ID gespeichert, welches die jeweilige Instanz der Attribut-Umwandlungs-Objektklasse 158 eindeutig kennzeichnet. Die weiteren Datenfelder der Attribut-Umwandlungs-Objektklasse 158 werden unten an Hand der Figur 10 erläutert. Die Attribut-Umwandlungs-Objektklasse 158 dient zum Speichern von Verweisen auf Umwandlungsprogramme, mit denen die Daten des äußeren Datenmodells 100 in Daten des inneren Datenmodells 102 umgewandelt werden. Außerdem werden in der Attribut-Umwandlungs-Objektklasse 158 Verweise auf Programme zur Datenumwandlung in umgekehrter Richtung gespeichert, d.h. von Daten gemäß dem inneren Datenmodell 102 in Daten gemäß dem äußeren Datenmodell 100, vgl. auch Figur 2.

Im folgenden werden die Relationen zwischen den in Figur 3 dargestellten Objektklassen näher erläutert. Während die Beziehungen der Überordnung und Unterordnung im Namensschema mit Hilfe von durchgehenden Pfeilen veranschaulicht werden, vgl. Figur 2, Teil a und Teil b, werden die Relationen zwischen den Objektklassen mit Hilfe von gestrichelten Pfeilen veranschaulicht.

Die Relationen R1 bestehen zwischen Instanzen der Objektklasse C-R und Instanzen der Zugriffs-Objektklasse 152. Die Relationen R1 sind sogenannte 1:1-Relationen, bei denen jeweils eine Instanz einer Objektklasse C-R auf eine Instanz der Zugriffs-Objektklasse 152 verweist. Mit Hilfe des Kennzeichens MOIA-ID läßt sich genau eine Instanz der Objektklasse C-R sowie genaue eine Instanz der Zugriffs-Objektklasse 152 ermitteln.

Die Relationen R2 bestehen zwischen Instanzen der Zugriffs-Objektklasse 152 und Instanzen der Paketvarianten-Objektklasse 154. Die Relationen R2 sind sogenannte L:1-Relationen, wobei L eine natürliche Zahl ist. Das bedeutet, daß bis zu L Instanzen der Zugriffs-Objektklasse 152 auf eine gemeinsame Instanz der Paketvarianten-Objektklasse 154 verweisen können. Dies hängt damit zusammen, daß es mehrere Instanzen der Objektklasse C-R geben kann, welche dieselbe Paketvariante haben. Mit Hilfe des Kennzeichens PCV-ID läßt sich ausgehend von einer bestimmten Instanz der Zugriffs-Objektklasse 152 die zugehörige Instanz der Paketvarianten-Objektklasse 154 ermitteln. Umgekehrt lassen sich mit Hilfe des Kennzeichens PCV-ID einer Instanz der Paketvarianten-Objektklasse 154 alle Instanzen der Zugriffs-Objektklasse 152 ermitteln, welche im Datenfeld 162 das Kennzeichen PCV-ID mit dem im Datenfeld 164 angegebenen Wert haben. Dabei wird eine Filterbedingung verwendet.

Zwischen den Instanzen der Paketvarianten-Objektklasse 154 und den Instanzen der Beschreibungs-Objektklasse 156 bestehen die Relationen R3, bei denen es sich um M:1-Relation handelt, wobei M eine natürliche Zahl ist. Das bedeutet, daß mehrere Instanzen der Paketvarianten-Objektklasse 154 auf dieselbe Instanz der Beschreibungs-Objektklasse 156 verweisen können. Mit Hilfe des Kennzeichens MOCD-ID läßt sich zu einer Instanz der Paketvarianten-Objektklasse 154 die zugehörige Instanz der Beschreibungs-Objektklasse 156 finden. In umgekehrter Richtung können mit Hilfe des Kennzeichens MOCD-ID zu einer vorgegebenen Instanz der Beschreibungs-Objektklasse 156 die Instanzen der Paketvarianten-Objektklasse 154 ermittelt werden, welche auf die betrachtete Instanz der Beschreibungs-Objektklasse 156 verweisen.

Die Relationen R4 bestehen zwischen verschiedenen Instanzen der Beschreibungs-Objektklasse 156. Die Relationen R4 sind N:1-Relationen, wobei N eine natürliche Zahl ist. Dies bedeutet, daß N Instanzen der Beschreibungs-Objektklasse 156 auf eine gemeinsame andere Instanz der Objektklasse 156 verweisen können. Die Art dieser Verweise wird unten an Hand der Figuren 8 und 9 näher erläutert.

Zwischen Instanzen der Beschreibungs-Objektklasse 156 und Instanzen der Attribut-Umwandlungs-Objektklasse 158 gibt es die Relationen R5. Die Relationen R5 werden mit Hilfe der Kennzeichen ACC-ID verwirklicht. Die Relationen R5 sind O:1-Relationen, wobei O eine natürliche Zahl ist. Das bedeutet, daß mehrere Instanzen der Beschreibungs-Objektklasse 156 auf eine gemeinsame Instanz der Attribut-Umwandlungs-Objektklasse 158 verweisen können.

Um das innere Datenmodell der Vermittlungsstelle 10 mit Hilfe der Objektklassen 152 bis 158 auf das standardgemäße äußere Datenmodell abzubilden, werden etwa sechshundert Instanzen der Paketvarianten-Objektklasse 154, zweihundert Instanzen der Beschreibungs-Objektklasse 156 und etwa sechzig Instanzen der Attribut-Umwandlungs-Objektklasse 158 benötigt. Jede Instanz der Objektklasse 154 bis 158 belegt etwa 1 KB Speicherplatz im Speicher der Vermittlungsstelle 10.

Eine objektorientierte Sichtweise OBOR bezieht sich auf Instanzen der Objektklasse C-R. Dagegen bezieht sich eine attributorientierte Sichtweise ATOR auf sämtliche Attribute, die in der betreffenden Instanz der Objektklasse C-R selbst und in den zur internen Darstellung der äußeren Objektklasse C dienenden Instanzen der Objektklassen 152 bis 158 festgelegt sind.

Figur 4 zeigt in einem Teil a ein für die Objektklasse C festgelegtes Definitionspaket P0. Im Definitionspaket P0 sind zusätzlich zu den vier Attributen der Basisobjektklasse 120, vgl. Figur 2, Teil d, zwei Attribute A0 und A3 festgelegt. Das Attribut A0 wird als Namensattribut für die Objektklasse C verwendet. Da es nur ein Definitionspaket P0 gibt, gibt es auch nur eine Paketvariante V0 für die Objektklasse C.

Figur 4 zeigt in einem Teil b im oberen Teil drei für die Objektklasse E festgelegte Definitionspakete P1, P2 und P3. Im Definitionspaket P1 sind zusätzlich zu den vier Attributen der Basisobjektklasse 120, vgl. Figur 2, Teil d, zwei Attribute A1 und A2 festgelegt. Das Attribut A1 ist das Namensattribut, das zur Bestimmung der Lage der betreffenden Instanz der Objektklasse im Namensschema verwendet wird. Im Definitionspaket P2 sind weitere Attribute A3 und A4 festgelegt. In dem Definitionspaket P3 ist nur ein einziges Attribut A5 festgelegt.

Bei der Definition der Objektklasse E wurde festgelegt, daß die Attribute des Definitionspaketes P1 unbedingt anzugeben sind. Die Attribute der Definitionspakete P2 und P3 sind dagegen nur unter bestimmten Bedingungen anzugeben. Demzufolge gibt es 2², d.h. vier zugelassene Varianten, die Definitionspakete P1 bis P3 zu kombinieren. Eine Paketvariante V1 enthält nur die Attribute A1 und A2 des Definitionspaketes P1. Eine Paketvariante V2 enthält die Attribute A1 und A2 des Definitionspaketes P1 sowie die Attribute A3 und A4 des Definitionspaketes P2. Eine Paketvariante V3 enthält die Attribute A1 und A2 des Definitionspaketes P1 sowie das Attribut A5 des Definitionspaketes P3. Eine letzte Paketvariante V4 enthält die Attribute A1 und A2 des Definitionspaketes P1, die Attribute A3 und A4 des Definitionspaketes P2 und das Attribut A5 des Definitionspaketes P3. Die Paketvariante muß beim Erzeugen einer Instanz einer Objektklasse gemäß äußerem Datenmodell 100 bestimmt werden und bleibt während des Bestehens dieser Instanz unverändert. Beispielsweise enthält eine Instanz E-1 der Objektklasse E des äußeren Datenmodells 102, vgl. Figur 2, die Attribute A1 und A2 gemäß Paketvariante V1. Dies gilt ebenso für eine Instanz E-2 der Objektklasse E. Eine Instanz E-3 der Objektklasse E enthält die Attribute A1 bis A4 der Paketvariante V2. In der Vermittlungsstelle 10 müssen nicht Instanzen aller Paketvarianten vorhanden sein. Dadurch reduziert sich die Anzahl der Instanzen der Paketvarianten-Objektklasse 154 und damit auch die Anzahl von Instanzen der Paketvarianten-Objektklasse 154 auch bei einer Vielzahl von theoretischen Varianten auf eine kleine Anzahl tatsächlich verwendeter Varianten, z.B. fünf bis sieben.

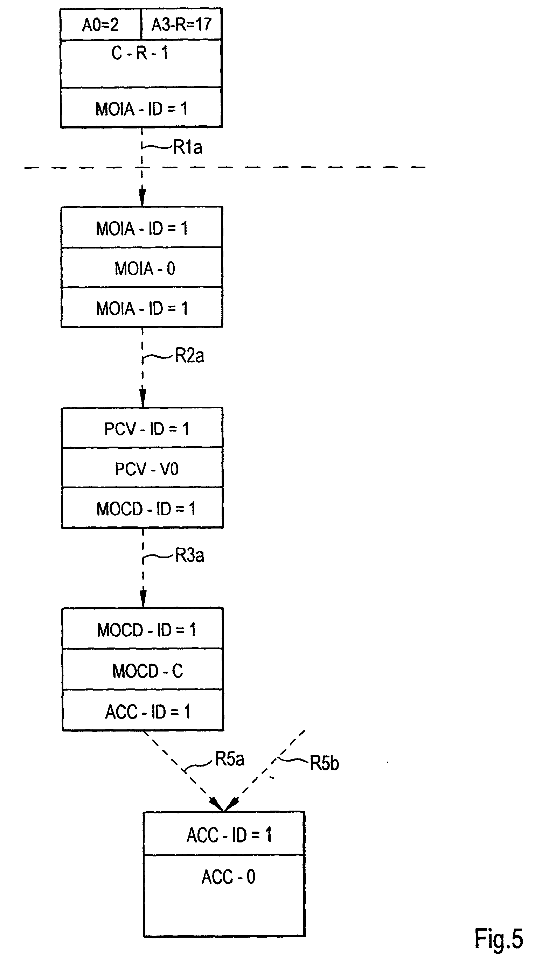

Figur 5 zeigt Instanzen der Objektklassen 152 bis 158 zur Beschreibung des inneren Datenmodells 102 für eine Instanz C-R-1 der Objektklasse C-R. Die Instanz C-R-1 enthält Attributwerte A0 = 2 und A3-R = 17. Weiterhin enthält die Instanz C-R-1 den Kennzeichenwert MOIA-ID = 1.

Eine Instanz MOIA-0 der Zugriffs-Objektklasse 152 enthält ebenfalls den Kennzeichenwert MOIA-ID = 1. Damit besteht eine Relation R1a zwischen der Instanz C-R-1 und der Instanz MOIA0. Das Kennzeichen PCV-ID der Instanz MOIA-0 hat den Wert 1.

Eine Instanz PCV-V0 stellt die einzige Paketvariante V0 dar, die es für die Objektklasse C gibt. In der Instanz PCV-VO hat das Kennzeichen PCV-ID den Wert 1. Somit besteht eine Relation R2a zwischen der Instanz MOIA-0 und der Instanz PCV-V0. Außerdem hat die Instanz PCV-V0 das Kennzeichen MOCD-ID = 1.

Eine Instanz MOCD-C der Beschreibungs-Objektklasse 156 hat den Kennzeichenwert MOCD-ID = 1, so daß eine Relation R3a zur Instanz PCV-V0 besteht. Weiterhin enthält die Instanz MOCD-C das Kennzeichen ACC-ID = 1.

Eine Instanz ACC-0 der Attribut-Umwandlungs-Objektklasse 158 enthält ebenfalls das Kennzeichen ACC-ID = 1, so daß eine Relation R5a zur Instanz MOCD-C besteht. Eine Relation R5b ist in Fig. 5 angedeutet und wird weiter unten an Hand der Figur 6 näher erläutert. In der Instanz ACC-0 ist unter anderem abgegeben, wie aus Werten für das äußere Attribut A3 Werte für das innere Attribut A3-R zu berechnen sind.

Das Kennzeichen MOIA-ID = 1 soll im folgenden für einen Zugriff auf die Instanz C-R-1 verwendet werden. Ein direkter Zugriff auf die Instanz C-R-1 ist meist deshalb nicht möglich, weil nicht bekannt ist, welche Objektklasse durch das Kennzeichen MOIA-ID = 1 bezeichnet wird. Jedoch ist die Datenstruktur der Zugriffs-Objektklasse 158 und damit auch die Datenstruktur der Instanz MOIA-0 bekannt. Bei einem Zugriff auf den Speicher 42 mit Hilfe des Datenbanksystems 24 wird auf die Instanz MOIA-0 zugegriffen. An Hand des Kennzeichens PCV-ID = 1 wird danach auf die Instanz PCV-V0 zugegriffen.

Aus der Instanz PCV-V0 wird das Kennzeichen MOCD-ID = 1 gelesen.

Bei einem dritten Zugriff auf den Speicher 42 wird mit Hilfe des Kennzeichen MOCD-ID = 1 und der bekannten Datenstruktur der Beschreibungs-Objektklasse 156 auf die Instanz MOCD-C zugegriffen. Diese Instanz enthält, wie unten an Hand der Fig. 8 noch näher erläutert, Daten, welche die Objektklasse spezifizieren, die durch das Kennzeichen MOIA-ID = 1 bezeichnet wird, hier also die Objektklasse C-R der Instanz C-R-1.

Schließlich werden bei einem vierten Zugriff auf den Speicher 42 die Daten der Instanz C-R-1 mit dem Kennzeichen MOIA-ID = 1 ausgelesen.

Figur 6 zeigt Instanzen der Objektklassen 152 bis 158 zur Beschreibung des inneren Datenmodells 102. Die bei der Beschreibung der Figur 4 erwähnten Instanzen E-1 bis E-3 der Objektklasse C werden auf Instanzen E-R-1, E-R-2 und E-R-3 abgebildet, die oberhalb einer gestrichelten Linie 200 dargestellt sind. Die Instanz E-R-1 enthält ein Kennzeichen MOIA-ID mit dem Wert Zwei. Außerdem enthält die Instanz E-R-1 Attribute A1-R = 11 und A2 = 4. Die Instanz E-R-1 ist der Instanz C-R-1 mit dem Namensattribut A0 = 2 untergeordnet. Beim Zugriff auf den Speicher 42 ist das Namensattribut A0 = 2 der übergeordneten Instanz C-R-1 mit anzugeben. Die Instanz E-R-2 enthält ein Kennzeichen MOIA-ID mit dem Wert Drei. Weiterhin enthält die Instanz E-R-2 ein Attribut A1-R = 12 und ein Attribut A2 = 6. Das bei einem Zugriff auf die Instanz E-R-2 anzugebende Namensattribut A0 = 2 der übergeordneten Instanz C-R-1 ist oberhalb der Instanz E-R-2 dargestellt. Die Instanz E-R-3 enthält das Kennzeichen MOIA-ID = 4, ein Attribut A1-R = 13, ein Attribut A2 = 7 und ein Attribut A3-R = 8. Oberhalb der Instanz E-R-3 ist wiederum das Namensattribut A0 = 2 der übergeordneten Instanz C-R-1 angedeutet.

Zu jeder Instanz E-R-1 bis E-R-3 gehört eine Instanz der Zugriffs-Objektklasse 152. So gehört zur Instanz E-R-1 eine Instanz MOIA-1, die als Kennzeichen MOIA-ID wie die Instanz ER-1 den Wert Zwei hat. Ebenso gehört zur Instanz E-R-2 bzw. zur Instanz E-R-3 eine Instanz MOIA-2 bzw. MOIA-3 der Zugriffs-Objektklasse 152 mit dem Wert Drei bzw. Vier für das Kennzeichen MOIA-ID.

Somit besteht zwischen der Instanz E-R-1 und der Instanz MOIA-1 eine Relation R1b. Zwischen der Instanz E-R-2 der Objektklasse E-R und der zugehörigen Instanz MOIA-2 der Zugriffs-Objektklasse 152 besteht eine Relation Rlc. Zwischen den Instanzen E-R-3 und MOIA-3 besteht eine Relation Rld.

Das Kennzeichen PCV-ID der Instanz MOIA-1 hat den Wert Zwei, der dem Wert des Kennzeichens PCV-ID in einer Instanz PCV-V1 der Paketvarianten-Objektklasse 154 entspricht. Damit besteht eine Relation R2b zwischen den Instanzen MOIA-1 und PCV-V1. Die Relation R2b zeigt an, daß die Instanz E-R-1 der Objektklasse E-R die Attribute der Paketvariante V1 hat, nämlich die Attribute A1 und A2.

Das Kennzeichen PCV-ID in der Instanz MOIA-2 hat ebenfalls den Wert Zwei, weil auch die Instanz E-R-2 die Attribute der Paketvariante V1 hat. Somit besteht zwischen den Instanzen MOIA-2 und PCV-V1 eine Relation R2c.

Eine Instanz PCV-V2 der Paketvarianten-Objektklasse 154 modelliert die Paketvariante V2. Das Kennzeichen PCV-ID der Instanz PCV-V2 hat den Wert Drei. Dieser Wert stimmt mit dem Wert des Kennzeichens PCV-ID in der Instanz MOIA-3 überein. Damit besteht zwischen der Instanz MOIA-3 und der Instanz PCV-V2 eine Relation R2d, welche anzeigt, daß die Instanz ER-3 eine Instanz gemäß äußerem Datenmodell 100 mit der Paketvariante V2 abbildet, vgl. auch Figur 4.

Das Kennzeichen MOCD-ID der Instanz PCV-V1 für die Paketvariante V1 hat den Wert Zwei. Dieser Wert stimmt mit dem Wert des Kennzeichens MOCD-ID einer Instanz MOCD-E der Beschreibungs-Objektklasse 156 überein. Somit besteht zwischen den Instanzen PCV-V1 und MOCD-E eine Relation R3b. Die Relation R3b zeigt an, daß die Instanz E-R-1 eine Instanz der Objektklasse E abbildet. Die Instanz E-R-2 bildet ebenfalls eine Instanz der Objektklasse E ab. Dies wird ebenfalls durch die Relation R3b angezeigt. Das Kennzeichen MOCD-ID der Instanz PCV-V2 hat den Wert Zwei, so daß eine Relation R3c anzeigt, daß die Instanz E-R-3 ebenfalls eine Instanz der Objektklasse E abbildet.

Das Kennzeichen ACC-ID in der Instanz MOCD-E hat den Wert 1. Damit besteht eine Relation R5b zur Instanz ACC-ID. Hätte das Kennzeichen ACC-ID der Instanz MOCD-E den Wert 0, so würde angezeigt, daß auf keine Instanz der Attribut-Umwandlungs-Objektklasse 158 verwiesen wird. Das würde bedeuten, daß beim Übergang von Daten der Objektklasse E zu Daten der Objektklasse E-R keine Attributwerte umzuwandeln sind. Die Werte der Attribute könnten somit ohne weiteres übernommen werden.

Figur 7 zeigt die Datenfelder der Paketvarianten-Objektklasse 154 an Hand der Instanz PCV-V1 für die Paketvariante V1, vgl. auch Figuren 4 und 6. Die Kennzeichen PCV-ID = 2 im Datenfeld 164a und MOCD-ID = 2 im Datenfeld 166a wurden bereits an Hand der Figur 6 erläutert. Die Paketvarianten-Objektklasse 154 wurde von der im Standard X.721 festgelegten Basisklasse abgeleitet, englisch auch "top" genannt. Ein Datenfeld 248 enthält indirekt die Angabe der Paketvariante, d.h. hier der Variante V1, vgl. Figur 4, durch direkte Angabe der Definitionspakete der betreffenden Paketvariante, d.h. hier des Definitionspaketes P1. In einem Datenfeld 250 ist eine Attribut-Liste enthalten, in der alle Attribute angegeben sind, die in der Paketvariante V1 enthalten sind, d.h. die Attribute A1 und A2. Außerdem ist in der Attribut-Liste für jedes Attribut A1, A2 angegeben, bei welchen Wartungsbefehlen es verwendet werden kann. Das Attribut A1 kann bei LESE-Anforderungen verwendet werden. Das Attribut A2 kann ebenfalls bei LESE-Anforderungen verwendet werden. Außerdem kann das Attribut A2 auch bei sogenannten ERSETZE-Anforderungen verwendet werden, bei denen der Wert des Attributs A2 durch einen anderen Wert ersetzt werden soll.

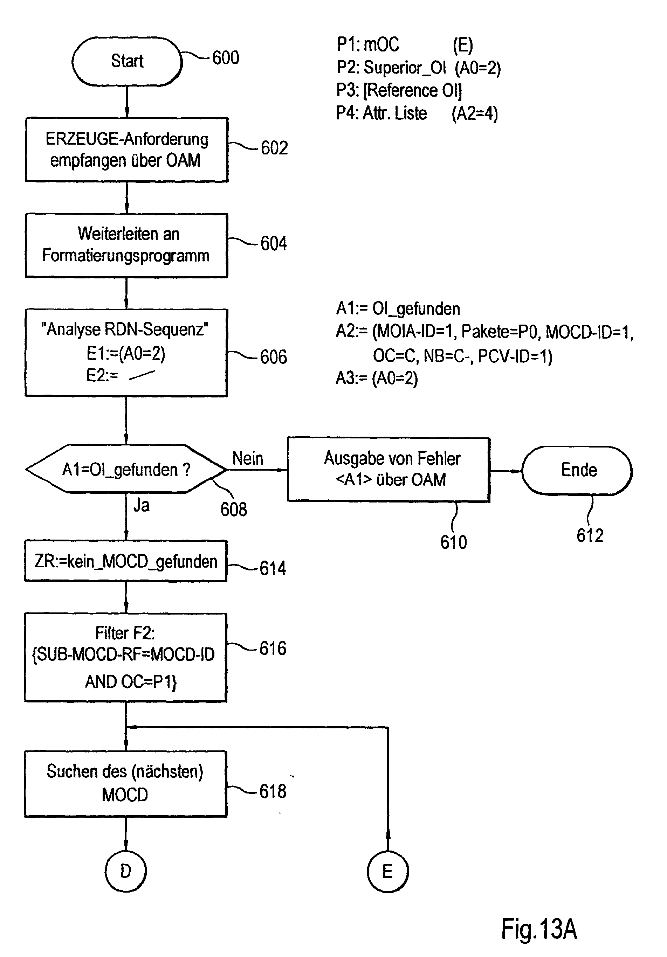

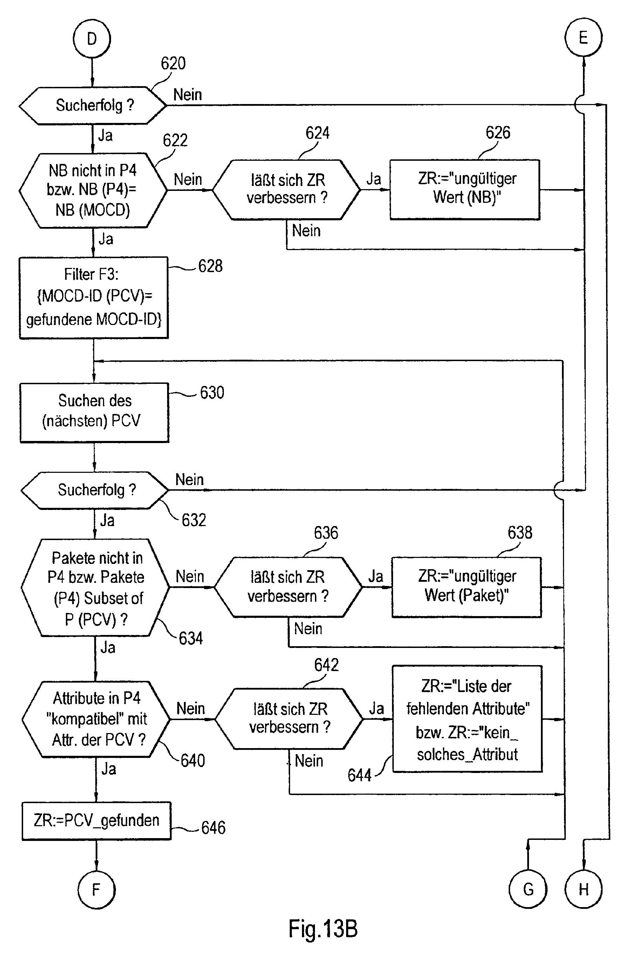

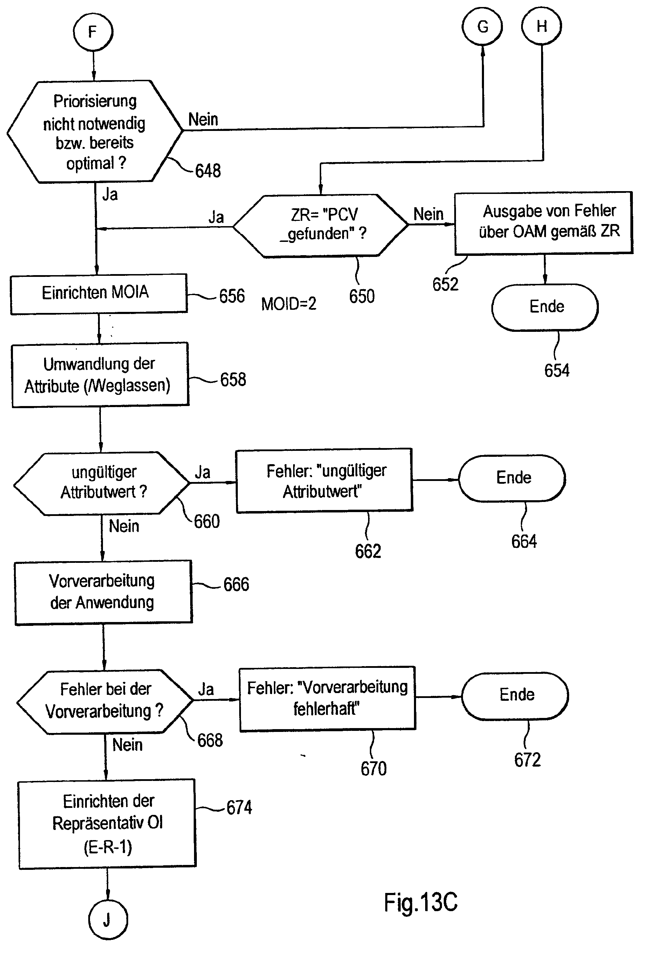

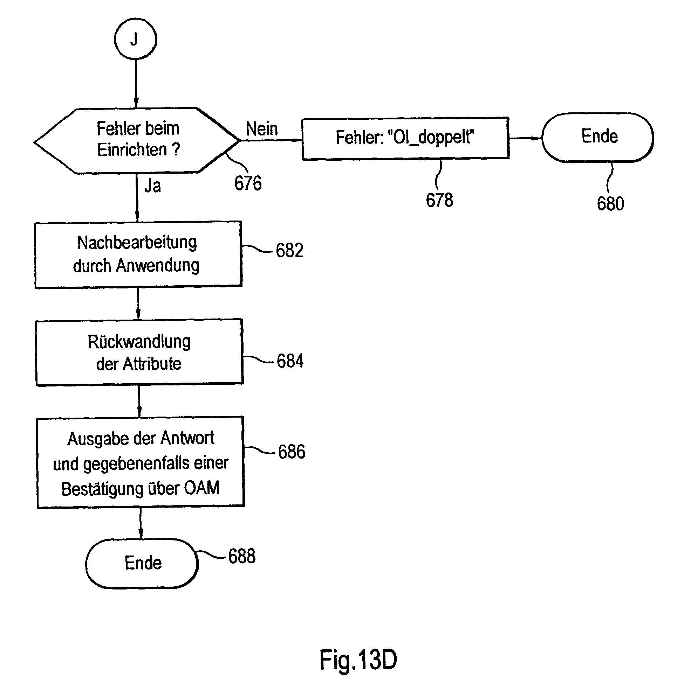

In einem Datenfeld 252 wird eine Priorität angegeben, die in der Instanz PCV-V1 den Wert 1 hat. Die Priorität dient der Auswahl unter den Instanzen der Paketvarianten-Objektklasse 154. Eine solche Auswahl wird unten an Hand der Figuren 13A bis 13D näher erläutert. Weitere Datenfelder sind durch Punkte 260 angedeutet.

Figur 8 zeigt die Datenfelder der Beschreibungs-Objektklasse am Beispiel der Instanz MOCD-E. In einem Datenfeld 168a ist das Kennzeichen MOCD-ID = 2 gespeichert, vgl. auch Figur 6. In einem Datenfeld 300 ist die Objektklasse OC = E vermerkt, d.h. die Objektklasse E des äußeren Datenmodells 100, die durch die Objektklasse E-R des inneren Datenmodells 102 abgebildet wird, vgl. Figur 2. In einem Datenfeld 302 ist das Attribut "Namensbindung" gespeichert. Dieses Attribut hat aufgrund der Unterordnung der Objektklasse E bezüglich der Objektklasse C den Wert E-C, der durch einen Ganzzahlwert repräsentiert wird. Gemäß Standard der X.700-Serie wird die Namensbindung durch eine Sequenz dargestellt. Diese Sequenz wurde für die interne Bearbeitung in der Vermittlungsstelle 10 in den Ganzzahlwert 17 umgewandelt.

In einem Datenfeld 304 ist ein Kennzeichen SUP-MOCD-RF mit dem Wert 1 gespeichert. Dieses Kennzeichen gibt die Instanz der Beschreibungs-Objektklasse 156 an, die zur Beschreibung der zu den durch die Instanz MOCD-E beschriebenen Instanzen E-R-1 bis E-R-3 übergeordneten Instanz C-R-1 dient. Dies ist die Instanz MOCD-C mit dem Kennzeichen MOCD-ID = 1. Der Inhalt des Datenfeldes 304 stimmt mit dem Wert des Kennzeichens MOCD-ID = 1 überein. Ausgehend von der Instanz MOCD-C lassen sich mit Hilfe des Kennzeichens SUP-MOCD-RF die untergeordneten Beschreibungsobjekte finden, z.B. das Objekt MOCD-E.

In einem Datenfeld 310 ist ein Kennzeichen LDN-ID-SEQ = A0, A1 gespeichert, das die Folge von Namensattributen angibt, durch die die Position der Objektklasse E des äußeren Datenmodells und auch die Position der Objektklasse E-R des inneren Datenmodells 102 angegeben wird.

In einem Datenfeld 312 ist ein Kennzeichen LDN-UMW-SEQ = A0 (-); A1 (A1-R, ADR1 + I1) enthalten, das angibt, wie die Namensattribute der zur Objektklasse E übergeordneten Objektklassen in innere Attribute umzuwandeln sind. Das Minuszeichen nach dem Attribut A0 bedeutet, daß keine Umwandlung erfolgt, so daß der Wert des Attributs A0 unverändert verwendet werden kann. Das Namensattribut A1 der Objektklasse E wird in ein Attribut A1-R umgewandelt. Die Befehle zur Umwandlung befinden sich innerhalb einer Tabelle, die an einer Adresse ADR1 gespeichert ist. Ein Index I1 gibt den Tabelleneintrag an, an welchem die Startadresse der Umwandlungsbefehle gespeichert ist.

In einem Datenfeld 314 ist ein Kennzeichen SVCS-Daten = OBOR(E-R), ATOR(E-R) enthalten, das die objektorientierte Sichtweise OBOR und die attributorientierte Sichtweise ATOR für die Objektklasse E-R festlegt. Hinter der Bezeichnung OBOR(E-R) verbirgt sich eine detaillierte Auflistung der Attribute, die zur OBOR-Sichtweise gehören. Dies sind alle Attribute der Objektklasse E-R. Hinter der Bezeichnung ATOR(E-R) verbirgt sich eine detaillierte Auflistung aller Attribute der attributorientierten Sichtweise. Das sind zum einen dieselben Attribute wie die der objektorientierten Sichtweise OBOR. Zum anderen sind in der attributorientierten Sichtweise ATOR alle Attribute aus der Zugriffs-Objektklasse 152, der Paketvarianten-Objektklasse 154 und der Beschreibungs-Objektklasse 156 enthalten.

Punkte 316 deuten weitere nicht dargestellte Datenfelder an. Die Instanz MOCD-E enthält in einem Datenfeld 170a das bereits an Hand der Figur 6 erläuterte Kennzeichen ACC-ID = 1.

Figur 9 zeigt eine Tabelle zum Festlegen von Bezügen zwischen Instanzen der Beschreibungs-Objektklasse 156 für die Klassen C, D, E, F des äußeren Datenmodells 100. Die jeweilige Klasse ist in der linken Spalte der Tabelle genannt. In der zweiten Spalte sind die Bezüge zwischen den Objektklassen angegeben, vgl. auch Figur 2, Teil a. Die Objektklasse D ist eine untergeordnete Klasse zur Objektklasse C, vgl. Pfeil 340. Die Objektklasse E ist ebenfalls der Objektklasse C untergeordnet, vgl. Pfeil 342. Die Objektklasse F ist der Objektklasse E untergeordnet, vgl. Pfeil 344. In der nächsten Spalte der Tabelle ist für jede Objektklasse das Kennzeichen MOCD-ID der Instanz der Beschreibungs-Objektklasse dargestellt, welche die jeweilige Klasse abbildet. Für die Klasse C hat die Instanz MOCD-C das Kennzeichen MOCD-ID = 1, vgl. auch Figur 5. Eine Instanz der Beschreibungs-Objektklasse für die Objektklasse D hat das Kennzeichen MOCD-ID = 17. Die Instanz MOCD-E für die Objektklasse E hat das Kennzeichen MOCD-ID = 2, vgl. auch Fig. 6. Eine Instanz MOCD-F für die Beschreibung der Objektklasse F hat das Kennzeichen MOCD-ID = 33.

In der rechten Spalte der Tabelle ist für jede genannte Instanz der Beschreibungs-Objektklasse der Wert des Kennzeichens SUP-MOCD-RF angegeben. Dieses Kennzeichen hat in der Instanz MOCD-C den Wert 0, der angibt, daß es keine übergeordnete Instanz für die Instanzen der Objektklasse C gibt. In der Instanz MOCD-D hat das Kennzeichen SUP-MOCD-RF den Wert 1 und verweist damit auf das Kennzeichen MOCD-ID in der Instanz MOCD-C zur Beschreibung von Instanzen der Objektklasse C. Auch das Kennzeichen SUP-MOCD-RF in der Instanz MOCD-E hat den Wert 1, so daß es auf die Instanz MOCD-C verweist, vgl. auch die Erläuterung zur Fig. 8. In der Instanz MOCD-F hat das Kennzeichen SUP-MOCD-RF den Wert 2. Dieser Wert stimmt mit dem Kennzeichen MOCD-ID der Instanz MOCD-E zur Beschreibung von Instanzen der Objektklasse E überein, so daß der Bezug 344 hergestellt ist.

Figur 10 zeigt die Datenfelder von Instanzen der Attribut-Umwandlungs-Objektklasse 158 am Beispiel der Instanz ACC-0. In einem Datenfeld 172a ist das bereits an Hand der Figuren 5 und 6 erläuterte Kennzeichen ACC-ID = 1 gespeichert. Die Instanz ACC-0 enthält außerdem drei Datenfeldzeilen 350, 352 und 354. In dem ersten Datenfeld jeder Datenfeldzeile 350 bis 352 befindet sich jeweils eine Angabe zu einem Attribut der Objektklasse E des äußeren Datenmodells. Attribute der Objektklasse E, die nicht umgewandelt werden, sind in der Instanz ACC-0 nicht vermerkt.

Die Datenfeldzeile 350 betrifft das Attribut A1. Im mittleren Datenfeld der Datenfeldzeile 350 ist vermerkt, daß das Attribut A1 durch ein Attribut A1-R der Objektklasse E-R abgebildet wird. Im rechten Datenfeld der Datenfeldzeile 350 ist vermerkt, daß die Umwandlungsvorschrift innerhalb einer Tabelle gespeichert ist, die an einer Adresse ADR1 beginnt. Innerhalb der Tabelle muß auf den Index I1 zugegriffen werden, um eine Startadresse für eine Befehlsfolge zur Umwandlung zu erhalten. Die Umwandlung besteht darin, daß der Wert des Attributes A1 um den Wert Zehn erhöht wird. Dadurch läßt sich eine Wertebereichsverschiebung erreichen.

Im linken Datenfeld der Datenfeldzeile 352 ist vermerkt, daß diese Zeile das Attribut A3 der Objektklasse E betrifft. Das mittlere Datenfeld der Datenfeldzeile 352 enthält einen Eintrag A3-R, der dasjenige Attribut angibt, in welches das Attribut A3 umgewandelt wird. Im rechten Datenfeld der Datenfeldzeile 352 ist ein Verweis auf die Startadresse zur Umwandlung des Attributes A3 angegeben. Es wird die gleiche Tabelle wie für das Attribut A1 verwendet, d.h. die Tabelle an der Adresse ADR1. Für die Umwandlung des Attributes A3 wird jedoch ein Index I2 verwendet.

Das linke Datenfeld der Datenfeldzeile 354 enthält einen Hinweis auf das Attribut A4. Das mittlere Datenfeld der Datenfeldzeile 354 enthält keinen Eintrag. Dies bedeutet, daß das Attribut A4 nicht umgewandelt, sondern jedesmal neu berechnet wird. Die Berechnungsvorschrift läßt sich mit Hilfe des Eintrags im linken Datenfeld der Datenfeldzeile 354 finden. Dieser Eintrag verweist auf eine Tabelle an einer Adresse ADR2 und auf einen Eintrag I1 in dieser Tabelle. Beim Berechnen des Attributes A4 wird beispielsweise die aktuelle Uhrzeit ermittelt.

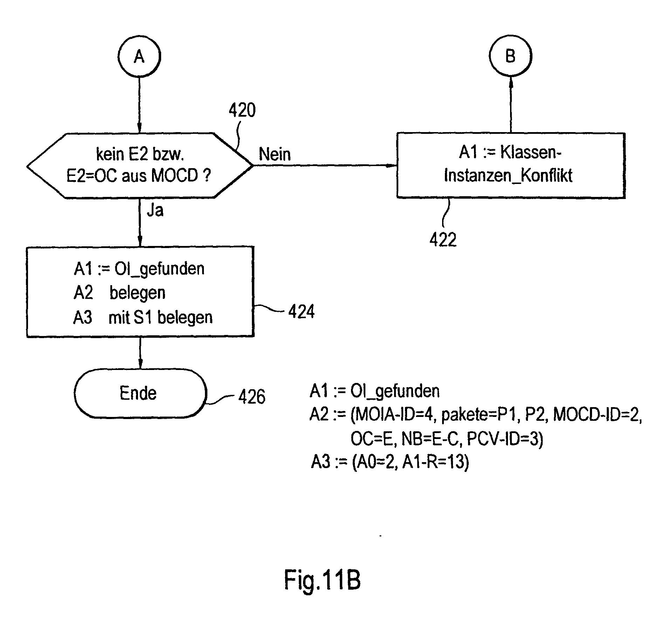

Figuren 11A und 11B zeigen ein Flußdiagramm mit Verfahrensschritten, die zur Auswahl einer Instanz der Beschreibungs-Objektklasse 156 bei der Analyse einer RDN-Sequenz (Relative Distinguished Name) durchgeführt werden. Das Verfahren beginnt in einem Verfahrensschritt 400, in welchem Eingabeparameter E1 und E2 vorgegeben werden. Der Eingabeparameter E1 enthält eine RDN-Sequenz, beispielsweise die Sequenz: A0 = 2, A1 = 3. Der Eingabeparameter E2 muß nicht unbedingt angegeben werden. Ist er jedoch angegeben, so enthält er die Bezeichnung einer Objektklasse, die im Wartungsbefehl angegeben ist, beispielsweise die Objektklasse E.

In einem Verfahrensschritt 402 wird ein Ausgabeparameter A1 mit einem Wert vorbelegt, der angibt, daß noch keine Instanz der Beschreibungs-Objektklasse 156 ermittelt werden konnte. In einem folgenden Verfahrensschritt 404 wird ein sogenannter Filter F1 für den Zugriff auf den Speicher 42 mit Hilfe des Datenbank-Zugriffsprogramms 24 vorbereitet, in dem als Suchkriterium angegeben ist, daß die im Eingabeparameter E1 angegebene Attribut-ID-Sequenz gleich der LDN-ID-SEQ in Instanzen der Beschreibungs-Objektklasse sein soll. Die ID-Sequenz im Beispiel ist A0, A1.

In einem Verfahrensschritt 406 wird mit Hilfe der Filterbedingung F1 vom Datenbank-Zugriffsprogramm 24 ein Zugriff auf den Datenspeicher 42 ausgeführt. In einem folgenden Verfahrensschritt 408 wird geprüft, ob der Zugriff im Verfahrensschritt 406 erfolgreich war, d.h. eine Instanz der Beschreibungs-Objektklasse 156 gefunden wurde, welche die Filterbedingung erfüllt. Wurde keine Instanz gefunden, so wird das Verfahren in einem Schritt 410 beendet. Wurde dagegen im Verfahrensschritt 406 eine Instanz ermittelt, die ein Kennzeichen LDN-ID-SEQ mit den im Eingabeparameter angegebenen Attributen hat, so wird das Verfahren in einem Verfahrensschritt 412 fortgesetzt. Bei einem Eingabeparameter E1 = (A0 = 2, A1 = 3) wird die Instanz MOCD-E ermittelt.

Als nächstes muß aufgrund der Mehrdeutigkeit der Namensattributsequenz ein Testzugriff auf den Datenspeicher 42 vorbereitet werden, in dem geprüft wird, ob die gefundene Instanz MOCD-E tatsächlich die für die Bearbeitung der Anforderung geeignete Instanz ist. Dazu werden im Verfahrensschritt 412 die Attributwerte des Eingabeparameters El für den Zugriff auf die Speichereinheit vorbereitet. Im Datenfeld 312 der im Verfahrensschritt 406 ermittelten Instanz MOCD-E ist vermerkt, daß der Attributwert des Attributs A0 für den Datenbankzugriff übernommen werden kann. Der Wert des Attributes A1 ist dagegen umzuwandeln. Bei der Umwandlung wird zum Wert 3 des Attributes A1 der Wert 10 addiert, so daß für den Datenbankzugriff eine Schlüsselsequenz S1 = (A0 = 2, A1-R = 13) verwendet wird.

In einem folgenden Verfahrensschritt 414 greift das Datenbank-Zugriffsprogramm 24 auf den Datenspeicher 42 unter Verwendung der Schlüsselsequenz S1 und der attributorientierten Sichtweise ATOR zu, die im Datenfeld 314 der Instanz MOCD-E angegeben ist.

In einem Verfahrensschritt 416 wird geprüft, ob eine Instanz ermittelt werden konnte. Im Ausführungsbeispiel wird die Instanz E-R-3 gefunden, vgl. Figur 6. Somit folgt unmittelbar nach dem Verfahrensschritt 416 ein Verfahrensschritt 418.

Wird jedoch im Verfahrensschritt 416 festgestellt, daß der Zugriff auf den Datenspeicher nicht erfolgreich war, d.h. keine entsprechende Instanz gefunden wurde, so wird das Verfahren im Verfahrensschritt 406 fortgesetzt. Das Verfahren befindet sich dann in einer Schleife aus den Verfahrensschritten 406 bis 416, in der weitere Instanzen MOCD ermittelt werden, welche die Filterbedingung F1 erfüllen. Für jede gefundene Instanz MOCD wird dann ein Testzugriff durchgeführt. Durch einen unten an Hand der Figuren 13A bis 13D erläutertes Verfahren zum Schreiben von Instanzen in den Datenspeicher 42 wird gewährleistet, daß es nur eine einzige Instanz im Datenspeicher 42 gibt, welche mit Hilfe der Schlüsselsequenz S1 gefunden werden kann.

Im Verfahrensschritt 418 werden nach einem erfolgreichen Zugriff mit Hilfe des Kennzeichens MOIA-ID der beim Testzugriff ermittelten Instanz, z.B. die Instanz E-R-3, alle Datenfelder der zugehörigen Instanzen der Objektklassen 152 bis 156 ausgelesen. Dabei werden die Relationen R1d, R2d und R3c verwendet, vgl. Figur 6. Für die Instanz E-R-3 werden u.a. folgende Datenfelder gelesen: MOIA-ID = 4, Pakete = P1, P2, MOCD-ID = 2, OC = E, NB = E-C und PCV-ID = 3.

In einem folgenden Verfahrensschritt 420 wird geprüft, ob im Eingabeparameter E2 eine Objektklasse angegeben ist. Ist dies nicht der Fall, so wird das Verfahren sofort im Verfahrensschritt 424 fortgesetzt. Ist jedoch eine Objektklasse angegeben, so wird im Verfahrensschritt 420 außerdem überprüft, ob die angegebene Objektklasse mit der Objektklasse der im Verfahrensschritt 406 gefundenen Instanz, z.B. MOCD-E, übereinstimmt. Dabei wird der im Datenfeld 310 gespeicherte Wert verwendet, vgl. Figur 8. Im erläuterten Beispiel stimmt die angeforderte Objektklasse mit der Objektklasse überein, die durch die Instanz MOCD-E abgebildet wird. Demzufolge würde unmittelbar nach dem Verfahrensschritt 420 der Verfahrensschritt 424 ausgeführt werden.

Wird im Verfahrensschritt 420 jedoch festgestellt, daß die im Eingabeparameter E2 angegebene Objektklasse nicht mit der Objektklasse im Datenfeld 310 übereinstimmt, so folgt unmittelbar nach dem Verfahrensschritt 420 ein Verfahrensschritt 422. Im Verfahrensschritt 422 wird der Ausgabeparameter A1 mit einem Wert belegt, der anzeigt, daß ein Klasseninstanzen-Konflikt vorliegt. Dieser Fehler ist im Standard X.710 festgelegt. Nach dem Verfahrensschritt 422 wird das Verfahren im Verfahrensschritt 406 fortgesetzt. Das Verfahren befindet sich nun in einer Schleife aus den Verfahrensschritten 406 bis 422, die entweder im Verfahrensschritt 410 oder im Verfahrensschritt 420 verlassen werden kann.

Wird die Schleife aus den Verfahrensschritten 406 bis 422 im Verfahrensschritt 420 verlassen, so wird im Verfahrensschritt 424 der Ausgabeparameter A1 mit einem Wert belegt, der anzeigt, daß eine geeignete Objektinstanz der Beschreibungs-Datenklasse gefunden worden ist. Weiterhin wird im Verfahrensschritt 424 ein Ausgabeparameter A2 mit den im Verfahrensschritt 418 ermittelten Attributwerten belegt. Ein Ausgabeparameter A3 wird mit der Schlüsselsequenz S1 belegt.

Anschließend wird das Verfahren in einem Verfahrensschritt 426 beendet. Die Ausgabeparameter A1, A2 und A3 werden für die weitere Bearbeitung des Wartungsbefehls verwendet.

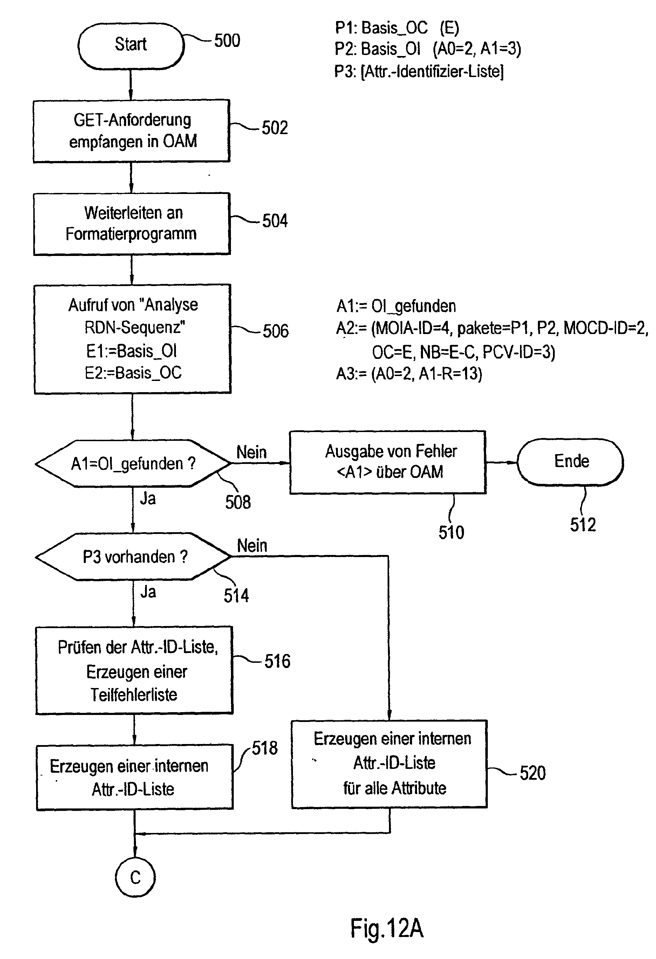

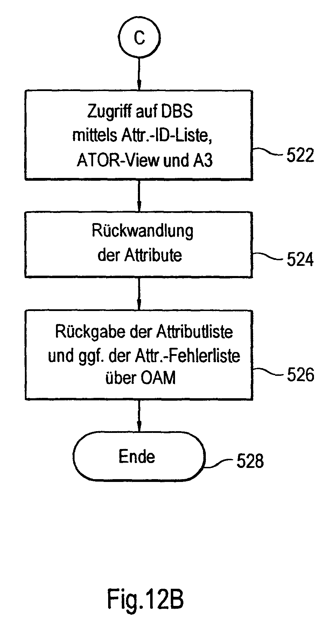

Die Figuren 12A und 12B zeigen ein Flußdiagramm mit Verfahrensschritten, die bei der Bearbeitung einer LESE-Anforderung ausgeführt werden, die in einem Wartungsbefehl enthalten ist.

Das Verfahren beginnt in einem Verfahrensschritt 500, in welchem die LESE-Anforderung im Wartungsrechner 12 erzeugt wird. Beim Erzeugen des Wartungsbefehls sind Parameter P1 und P2 sowie wahlweise ein Parameter P3 anzugeben. Der Parameter P1 betrifft die Objektklasse, auf deren Instanz zugegriffen werden soll. Dies sei die Objektklasse E. Im Parameter P2 muß angegeben werden, auf welche Instanz der Objektklasse E Bezug genommen werden soll. Die Instanz wird durch Angabe der Namenssequenz bezeichnet, z.B. A0 = 2, A1 = 3. Im Parameter P3 kann angegeben werden, auf welche Attribute der Instanz zugegriffen werden soll. Wenn keine Angabe erfolgt, wird auf alle Attribute der Instanz zugegriffen. Beispielsweise werden die Attribute A2, A3 und A4 angefordert.

Im Verfahrensschritt 502 wird der Wartungsbefehl von der Vermittlungsstelle 10 empfangen und vom Schnittstellenprogramm 20 bearbeitet. Dabei wird festgestellt, daß dieser Wartungsbefehl an das Datenformatierungsprogramm 22 weiterzuleiten ist. Somit wird in einem Verfahrensschritt 504 der Wartungsbefehl an das Datenformatierungsprogramm 22 weitergegeben.

Im Verfahrensschritt 506 wird wie oben an Hand der Figuren 11A und 11B erläutert eine Instanz der Beschreibungs-Objektklasse 156 ausgewählt. Dazu werden als Eingabeparameter E1 die Angaben des Parameters P2 verwendet. Als Eingabeparameter E2 wird der Inhalt des Parameters P1 übergeben. Somit stimmen die Eingabeparameter E1 und E2 mit den oben als Beispiel genannten Eingabeparametern überein. Das hat zur Folge, daß im Verfahrensschritt 506 die Instanz MOCD-E ermittelt wird. Die Ausgabeparameter A1, A2 und A3 haben die oben beim Erläutern des Verfahrensschritts 424 angegebenen Werte, d.h. der Ausgabeparameter A1 hat einen Wert, der angibt, daß eine Instanz gefunden worden ist. Im Ausgabeparameter A2 sind die im Verfahrensschritt 418 ermittelten Werte angegeben, d.h. u.a. MOIA-ID = 4, Pakete = P1, P2, MOCD-ID = 2, OC = E, NB = E-C und PCV-ID = 3. Der Ausgabeparameter A3 enthält die Schlüsselsequenz S1 = (A0 = 2, A1-R = 13).

Im Verfahrensschritt 508 wird geprüft, ob der Ausgabeparameter A1 einen Wert hat, der anzeigt, daß eine geeignete Instanz der Beschreibungs-Objektklasse ermittelt werden konnte. Ist dies nicht der Fall, so wird in einem Verfahrensschritt 510 an das Schnittstellenprogramm 20 der im Ausgabeparameter A1 angegebene Fehler weitergeleitet. Das Schnittstellenprogramm 20 sendet an den Bedienrechner 12 eine Fehlermeldung, in der der Inhalt des Ausgabeparameters A1 angegeben ist. In einem Verfahrensschritt 512 wird das Verfahren dann beendet.

Wird im Verfahrensschritt 508 dagegen festgestellt, daß der Ausgabeparameter A1 einen Wert hat, der anzeigt, daß eine geeignete Instanz der Beschreibungs-Objektklasse ermittelt werden konnte, so folgt unmittelbar nach dem Verfahrensschritt 508 ein Verfahrensschritt 514.

Im Verfahrensschritt 514 wird geprüft, ob der Parameter P3 angegeben worden ist. Ist dies der Fall, so folgt ein Verfahrensschritt 516, in welchem die Attribute der im Parameter P3 angegebenen Attributliste überprüft werden. Zum Überprüfen wird die in einem dem Datenfeld 250 entsprechenden Datenfeld der Instanz PCV-V2 angegebene Attributliste verwendet. Die Instanz PCV-V2 läßt sich aus der Speichereinheit 42 mit Hilfe des Kennzeichens PCV-ID = 3 lesen.

Mit Hilfe der Attributliste werden die Attribute daraufhin überprüft, ob ein LESE-Zugriff gestattet ist. Für Attribute, für die kein LESE-Zugriff gestattet ist, wird eine Teilfehlerliste erzeugt. In die Teilfehlerliste werden auch Attribute eingetragen, die zwar im Parameter P3 angegeben sind, jedoch nicht in der Attributliste enthalten sind.

In einem folgenden Verfahrensschritt 518 wird eine interne Attributliste erzeugt. Dazu wird mit Hilfe des Kennzeichens ACC-ID = 1 in der Instanz MOCD-E die Instanz ACC-0 der Umwandlungs-Objektklasse 158 aus der Speichereinheit 42 gelesen. Mit Hilfe der Datenfeldzeilen 350, 352 und 354 wird festgestellt, daß das Attribut A2 nicht umzuwandeln ist und daß für das Attribut A3 das interne Attribut A3-R verwendet werden muß. Das Attribut A4 kann nicht beim Zugriff auf die Speichereinheit verwendet werden, weil es neu zu berechnen ist.

Wird im Verfahrensschritt 514 dagegen festgestellt, daß der Parameter P3 nicht angegeben worden ist, so wird in einem Verfahrensschritt 520 für alle in der Attributliste der betreffenden Instanz der Paketvarianten-Objektklasse 154 angegebenen Attribute eine Umwandlung durchgeführt, wie sie im Verfahrensschritt 518 erläutert worden ist.

Sowohl nach dem Verfahrensschritt 518 als auch nach dem Verfahrensschritt 520 folgt ein Verfahrensschritt 522, in welchem das Datenbank-Zugriffsprogramm 24 auf die Speichereinheit 42 mit Hilfe der internen Attribut-ID-Liste, den in der attributorientierten Sichtweise ATOR enthaltenen Angaben im Datenfeld 314, vgl. Figur 8, sowie mit Hilfe der im Ausgabeparameter A3 gespeicherten Schlüsselsequenz zugreift. Dabei werden vom Datenbank-Zugriffsprogramm Werte für die in der internen Attribut-ID-Liste angegebenen Attribute übergeben.

In einem Verfahrensschritt 524 werden vom Datenformatierungsprogramm 22 die übergebenen Attributwerte umgewandelt, soweit eine Umwandlung erforderlich ist. Das Namensattribut A1-R wird nicht rückgewandelt. An Hand der Datenfeldzeilen 350 bis 354, vgl. Figur 10, wird ermittelt, daß der Wert des Attributs A2 unverändert bleiben kann und daß für das Attribut A3 eine Rückwandlung des Attributwertes erfolgen muß. Die durch den Verweis ADR1 + I2 angegebene Befehlsfolge wird mit einem Parameter aufgerufen, der angibt, daß eine Rückwandlung erfolgen soll. Als Ergebnis wird der Wert acht des Attributes A3 in eine Zeichenkette "acht" umgewandelt. Für das Attribut A4 wird die Umwandlungsbefehlsfolge aufgerufen, deren Startadresse an der Adresse ADR2 + I1 gespeichert ist. Beim Ausführen dieser Befehlsfolge wird die aktuelle Uhrzeit dem Attribut A4 zugewiesen.

In einem Verfahrensschritt 526 werden die Attributwerte und gegebenenfalls die im Verfahrensschritt 516 erzeugte Fehlerliste an das Schnittstellenprogramm 20 übergeben. Das Schnittstellenprogramm 20 erzeugt eine Nachricht gemäß dem Protokoll, das für die Übertragung zum Bedienrechner 12 verwendet wird. Anschließend wird diese Nachricht zum Bedienrechner gesendet. Das Verfahren ist damit in einem Verfahrensschritt 528 beendet.

Die Figuren 13A bis 13D zeigen ein Flußdiagramm mit Verfahrensschritten, die bei der Bearbeitung einer ERZEUGE-Anforderung durchgeführt werden, welche in einem vom Bedienrechner 12 kommenden Bedienbefehl enthalten ist. Das Verfahren beginnt in einem Verfahrensschritt 600, bei dem durch eine Bedienperson des Wartungsrechners 12 Parameter P1, P2 und P4 sowie wahlweise ein Parameter P3 vorgegeben werden. Der Parameter P1 enthält eine Angabe über die Datenstruktur der zu erzeugenden Instanz, d.h. die Angabe einer Objektklasse, z.B. die Objektklasse E. Im Parameter P2 wird die übergeordnete Instanz mit Hilfe von Namensattributbezeichnern und Namensattributwerten angegeben, z.B. A0 = 2 zur Bezeichnung der übergeordneten Instanz C-R-1. Der Parameter P3 wird nur angegeben, wenn eine Instanz mit Hilfe eines Verfahrens erzeugt werden soll, bei dem eine Referenz angegeben ist. In diesem Fall wird die referenzierte Instanz im Parameter P3 angegeben. Im folgenden soll jedoch auf diese Art von ERZEUGE-Anforderungen nicht eingegangen werden, so daß der Parameter P3 frei bleibt. Im Parameter P4 wird eine Attributliste angegeben, die Attribute enthält, die nach Auffassung der Bedienperson mit ebenfalls im Parameter P4 angegebenen Werten belegt werden sollen, z.B. A2 = 4.

Im Verfahrensschritt 602 wird die ERZEUGE-Anforderung von der Vermittlungsstelle 10 mit Hilfe des Schnittstellenprogramms 20 empfangen. Das Schnittstellenprogramm 20 prüft die ERZEUGE-Anforderung darauf hin, ob sie an die Zugriffseinheit 52 eines Anwendungsprogramms 50 oder an das Datenformatierungsprogramm 22 weiterzuleiten ist. In einem Verfahrensschritt 604 wird die ERZEUGE-Anforderung an das Datenformatierungsprogramm 22 weitergeleitet.

In einem Verfahrensschritt 606 wird das an Hand der Figuren 11A und 11B erläuterte Verfahren zur Analyse einer RDN-Sequenz durchgeführt. Dabei wird als Eingabeparameter E1 das Attribut A0 und sein Wert 2 verwendet. Der Eingabeparameter E2 bleibt frei. Das bedeutet, daß als Eingabeparameter E1 das Namensattribut der übergeordneten Objektinstanz angegeben wird. Beim Ausführen der Analyse wird die Instanz MOCD-C gefunden, die in einem dem Datenfeld 310 entsprechenden Datenfeld das Kennzeichen LDN-ID-SEQ = A0 enthält. Beim Testzugriff auf die Speichereinheit wird die Instanz C-R-1 ermittelt, die das Namensattribut A0 mit dem Wert 2 hat. Demzufolge ist die Instanz MOCD-C die zur Bearbeitung der ERZEUGE-Anforderung geeignete Instanz der Beschreibungs-Objektklasse 156. Der Ausgabeparameter A1 enthält einen Wert, der anzeigt, daß eine geeignete Instanz MOCD-C ermittelt worden ist. Der Parameter A2 enthält u.a. folgende Angaben: MOIA-ID = 1, Pakete = P0, MOCD-ID = 1, OC = C und NB = C- und PCV-ID = 1. Der Ausgabeparameter A3 enthält die Schlüsselsequenz A0 = 2.

In einem Verfahrensschritt 608 wird geprüft, ob der Ausgabeparameter A1 einen Wert hat, der anzeigt, daß eine geeignete Instanz gefunden worden ist. Ist dies nicht der Fall, so wird in einem Verfahrensschritt 610 der im Ausgabeparameter A1 enthaltene Fehlerwert an das Schnittstellenprogramm 20 übergeben und von diesem an den Bedienrechner 12 weitergeleitet. Der Fehlerwert, der darauf hinweist, daß keine geeignete Objektinstanz gefunden worden ist, wird jedoch dahingehend abgewandelt, daß keine geeignete übergeordnete Objektinstanz gefunden worden ist. Damit ist das Verfahren in einem Verfahrensschritt 612 beendet.

Wird im Verfahrensschritt 608 festgestellt, daß eine geeignete Instanz gefunden worden ist, so folgt unmittelbar ein Verfahrensschritt 614. Im Verfahrensschritt 614 wird ein Zwischenresultat ZR mit einem Wert vorbelegt, der angibt, daß keine geeignete Instanz der Beschreibungs-Objektklasse 156 für die im Parameter P1 angegebene Objektklasse gefunden worden ist, d.h. hier der Objektklasse E.

In einem Verfahrensschritt 616 wird eine Filterbedingung F2 erzeugt. Gemäß dieser Filterbedingung F2 soll das Kennzeichen SUP-MOCD-RF eine Instanz der Beschreibungs-Objektklasse 156 den Wert haben, den das Kennzeichen MOCD-ID im Ausgabeparameter A2 und damit in der Instanz zur Beschreibung der übergeordneten Objektklasse hat. Weiterhin soll gemäß Filterbedingung F2 eine Instanz der Beschreibungs-Objektklasse 156 ein Kennzeichen OC mit dem im Parameter P1 angegebenen Wert haben, d.h. im Beispiel OC = E.

In einem Verfahrensschritt 618 wird eine Instanz der Beschreibungs-Objektklasse 156 gesucht, welche die Filterbedingung F2 erfüllt. Für die oben genannte ERZEUGE-Anforderung wird die Instanz MOCD-E gefunden.

In einem Verfahrensschritt 620 wird geprüft, ob eine Instanz im Verfahrensschritt 618 ermittelt werden konnte. Konnte eine Instanz ermittelt werden, so wird das Verfahren in einem Verfahrensschritt 622 fortgesetzt. Weiter unten werden die Schritte erläutert, die auszuführen sind, wenn keine Instanz ermittelt werden konnte.

Im Verfahrensschritt 622 wird zum einen geprüft, ob in der im Parameter P4 enthaltenen Attributliste das Namensbindungs-Attribut NB angegeben ist. Ist ein solches Attribut NB angegeben, so wird im Verfahrensschritt 622 weiterhin geprüft, ob der Wert des im Parameter P4 angegebenen Namensbindungs-Attributes mit dem im Ausgabeparameter A2 enthaltenen Wert des Namensbindungs-Attributes NB übereinstimmt. Ist dies nicht der Fall, so folgt nach dem Verfahrensschritt 622 ein Verfahrensschritt 624, in welchem geprüft wird, ob für das Zwischenresultat ZR ein Fehler angegeben werden kann, der weniger schwerwiegend als der aktuell im Zwischenresultat ZR angegebene Fehler ist. Ist dies der Fall, so wird in einem Verfahrensschritt 626 dem Zwischenresultat ZR ein Wert zugewiesen, der angibt, daß ein ungültiger Wert für das Namensbindungs-Attribut NB vorliegt. Die Schwere der Fehler ist durch die Abfolge der in den Figuren 13A bis 13D dargestellten Verfahrensschritte vorgegeben. Fehler, die in Verfahrensschritten mit größeren Bezugszeichen zugewiesen werden, sind weniger schwerwiegend als Fehler, die in Verfahrensschritten mit kleineren Bezugszeichen zugewiesen werden. Anschließend wird das Verfahren im Schritt 618 fortgesetzt. Wird im Verfahrensschritt 624 dagegen festgestellt, daß der aktuell im Zwischenresultat ZR angegebene Fehler weniger schwerwiegend als der Fehler "ungültiger Wert des Namensbindungs-Attributes" ist, so wird der Verfahrensschritt 626 nicht ausgeführt. Das Verfahren wird unmittelbar im Verfahrensschritt 618 fortgesetzt, wobei eine nächste Instanz MOCD gesucht wird, welche die Filterbedingung F2 erfüllt. Für die oben angegebene ERZEUGE-Anforderung ist kein Namensbindungs-Attribut NB angegeben, so daß nach dem Verfahrensschritt 622 unmittelbar der Verfahrensschritt 628 folgt.

Wird im Verfahrensschritt 622 festgestellt, daß im Parameter P4 kein Namensbindungs-Attribut NB angegeben ist bzw. daß bei angegebenem Namensbindungs-Attribut der Wert des Namensattributes mit dem im Ausgabeparameter A2 angegebenen Wert für das Namensattribut übereinstimmt, so folgt unmittelbar nach dem Verfahrensschritt 622 der Verfahrensschritt 628. Im Verfahrensschritt 628 wird eine Filterbedingung F3 erzeugt, gemäß der eine Instanz der Paketvarianten-Objektklasse gesucht wird, die ein Kennzeichen MOCD-ID enthält, dessen Wert dem Wert des Kennzeichens MOCD-ID in der im Verfahrensschritt 618 gefundenen Instanz entspricht. Für die Instanz MOCD-E hat das Kennzeichen MOCD-ID den Wert 2. Somit werden durch die Filterbedingung F3 die beiden in Figur 6 dargestellten Instanzen PCV-V1 und PCV-V2 ausgewählt.

In einem Verfahrensschritt 630 wird die erste Instanz gesucht, welche die Filterbedingung F3 erfüllt. Es sei angenommen, daß dies die Instanz PCV-V1 ist.

In einem Verfahrensschritt 632 wird geprüft, ob im Verfahrensschritt 630 eine Instanz gefunden werden konnte, welche die Filterbedingung F3 erfüllt. Ist dies nicht der Fall, so wird das Verfahren im Verfahrensschritt 618 fortgesetzt. Wurde jedoch eine Instanz gefunden, welche die Filterbedingung F3 erfüllt, so folgt unmittelbar nach dem Verfahrensschritt 632 ein Verfahrensschritt 634.

Im Verfahrensschritt 634 wird geprüft, ob im Parameter P4 ein Paket-Attribut angegeben ist. Ist dies der Fall, so wird weiterhin geprüft, ob die für das Paket-Attribut im Parameter P4 angegebenen Definitionspakete eine Untermenge der Definitionspakete sind, die zur aktuell betrachteten Paketvariante gehören. Eine Untermenge liegt auch vor, wenn die im Paketattribut angegebenen Definitionspakete mit den Definitionspaketen der aktuell betrachteten Paketvariante übereinstimmen. Die Paketvariante ergibt sich aus der im Verfahrensschritt 630 gefundenen Instanz der Paketvarianten-Objektklasse. Liegt keine Untermenge vor, so folgt unmittelbar nach dem Verfahrensschritt 634 ein Verfahrensschritt 636, in welchem geprüft wird, ob sich der Wert des Zwischenresultats ZR so verändern läßt, daß ein weniger schwerwiegender Fehler angegeben wird. Ist dies der Fall, so wird im Verfahrensschritt 638 für das Zwischenresultat ZR ein Wert vergeben, der anzeigt, daß in der Anforderung im Paket-Attribut ein ungültiger Wert angegeben worden ist. Anschließend wird das Verfahren im Verfahrensschritt 630 fortgesetzt, in dem eine nächste Instanz der Paketvarianten-Objektklasse geprüft wird, welche die Filterbedingung F3 erfüllt. Wird im Verfahrensschritt 636 dagegen festgestellt, daß der Fehler "ungültiger Wert (Paket)" schwerwiegender als der aktuell im Zwischenresultat ZR angegebene Fehler ist, so folgt unmittelbar nach dem Verfahrensschritt 636 der Verfahrensschritt 630.

Wird im Verfahrensschritt 634 festgestellt, daß ein Paket-Attribut nicht im Parameter P4 angegeben ist oder daß die im Parameter P4 angegebenen Definitionspakete eine Untermenge der Definitionspakete der im Verfahrensschritt 620 gefundenen Instanz sind, so folgt unmittelbar nach dem Verfahrensschritt 634 ein Verfahrensschritt 640. Im Verfahrensschritt 640 wird überprüft, ob die im Parameter P4 angegebenen Attribute mit den Attributen der Paketvarianten-Instanz "kompatibel" sind, die im Verfahrensschritt 630 gefunden worden ist. Kompatibel heißt, daß im Parameter P4 Werte für diejenigen Attribute aus in der Paketvariante enthaltenen Definitionspaketen angegeben sind, für die keine Default- bzw. Initialwerte vorgegeben sind. Kompatibel bedeutet weiterhin, daß keine Werte für Attribute im Parameter P4 angegeben worden sind, die nicht in der betrachteten Paketvariante enthalten sind. Beim Überprüfen wird die im Datenfeld 250, vgl. Figur 7, enthaltene Attributliste verwendet, wenn im Verfahrensschritt 630 die Instanz PCV-V1 gefunden worden ist. Bei anderen Instanzen der Paketvarianten-Objektklasse 154 gibt es dem Datenfeld 250 entsprechende Datenfelder.

Werden Verstöße gegen die "Kompatibilität" im Verfahrensschritt 640 festgestellt, so folgt unmittelbar ein Verfahrensschritt 642, in dem geprüft wird, ob sich der Wert des Zwischenresultats ZR verbessern läßt. Ist dies der Fall, so wird im Verfahrensschritt 644 dem Zwischenresultat ZR ein Wert zugewiesen, der Attribute angibt, die zwingend mit Werten zu belegen sind, für die jedoch in der ERZEUGE-Anforderung keine Werte enthalten sind. Für Attribute, die in der ERZEUGE-Anforderung enthalten sind, jedoch in der Attributliste der betrachteten Paketvariante nicht enthalten sind, wird im Zwischenresultat ZR angegeben, daß dieses Attribut nicht vorhanden ist. Nach dem Verfahrensschritt 644 folgt der Verfahrensschritt 630. Wird im Verfahrensschritt 642 festgestellt, daß sich der Wert des Zwischenresultats ZR nicht verbessern läßt, so wird nach dem Verfahrensschritt 642 sofort der Verfahrensschritt 630 ausgeführt.

Wird im Verfahrensschritt 640 festgestellt, daß die im Parameter P4 angegebenen Attribute zu den in der Attributliste angegebenen Attributen kompatibel sind, so folgt unmittelbar nach dem Verfahrensschritt 640 ein Verfahrensschritt 646, in welchem das Zwischenresultat ZR einen Wert erhält, der angibt, daß eine Paketvariante bestimmt werden konnte.

In einem Verfahrensschritt 648 wird geprüft, ob bei der Auswahl einer Paketvariante bestimmte Prioritäten zu berücksichtigen sind. Müssen Prioritäten berücksichtigt werden, so wird das Datenfeld 252 bzw. ein diesem Datenfeld entsprechendes Datenfeld in anderen Instanzen der Paketvarianten-Objektklasse 154 ausgewertet. Ist das Beachten einer Priorität erforderlich und hat die aktuell betrachtete Instanz nicht den höchsten Prioritätswert, so wird das Verfahren im Verfahrensschritt 630 mit der nächsten Instanz der Paketvarianten-Objektklasse 154 fortgesetzt, welche die Filterbedingung F3 erfüllt.

Wird im Verfahrensschritt 648 festgestellt, daß keine Priorität beachtet werden muß oder daß bei zu beachtender Priorität bereits eine Paketvariante mit der höchsten Priorität ermittelt worden ist, so folgt unmittelbar nach dem Verfahrensschritt 668 ein Verfahrensschritt 656.

Wurde im Verfahrensschritt 620 festgestellt, daß im Verfahrensschritt 618 keine Instanz der Beschreibungs-Objektklasse 156 ermittelt werden konnte, so folgt unmittelbar nach dem Verfahrensschritt 620 ein Verfahrensschritt 650, in welchem geprüft wird, ob das Zwischenresultat ZR einen Wert hat, der anzeigt, daß eine passende Paketvariante gefunden worden ist. Wurde keine passende Paketvariante gefunden, so wird der im Zwischenresultat ZR enthaltene Wert an das Schnittstellenprogramm 20 weitergeleitet, vgl. Verfahrensschritt 652. Das Schnittstellenprogramm 20 erzeugt eine Nachricht für den Bedienrechner, in welcher der Fehler angegeben ist, der durch das Zwischenresultat ZR bezeichnet ist. In einem Verfahrensschritt 654 wird das Verfahren dann beendet.

Wird jedoch im Verfahrensschritt 650 festgestellt, daß das Zwischenresultat ZR einen Wert hat, der angibt, daß eine Paketvariante gefunden worden ist, welche die in den Verfahrensschritten 634 und 640 geprüften Bedingungen erfüllt, so folgt unmittelbar nach dem Verfahrensschritt 650 ebenfalls der Verfahrensschritt 656.

Im Verfahrensschritt 656 wird in der Speichereinheit eine neue Instanz der Zugriffs-Objektklasse 152 eingerichtet. Der Wert für das Kennzeichen MOIA-ID wird nach einem Vergabeverfahren festgelegt, das gewährleistet, daß das Kennzeichen MOIA-ID eindeutig im Datenspeicher 42 ist. Für die betrachtete ERZEUGE-Anforderung wird die Instanz MOIA-1 erzeugt, welche das Kennzeichen MOIA-ID = 2 hat. Das Kennzeichen PCV-ID der Instanz MOIA-1 hat den Wert 2, so daß auf die Instanz PCV-V1 der Paketvarianten-Objektklasse 154 verwiesen wird, welche die Paketvariante V1 beschreibt.

In einem Verfahrensschritt 658 erfolgt die Umwandlung der im Parameter P4 angegebenen Attributwerte. Dabei wird die Instanz ACC-0 verwendet. Das Attribut A2 muß nicht umgewandelt werden, so daß der Wert 4 beibehalten werden kann. Im Verfahrensschritt 658 wird außerdem geprüft, ob die für die Attribute angegebenen Werte innerhalb vorgegebenen Wertebereiche liegen.

Im Verfahrensschritt 660 wird geprüft, ob im Verfahrensschritt 658 Wertebereichsüberschreitungen festgestellt worden sind. Sind Wertebereichsüberschreitungen festgestellt worden, so folgt nach dem Verfahrensschritt 660 ein Verfahrensschritt 662, in welchem an das Schnittstellenprogramm 20 eine Fehlermeldung übermittelt wird, die auf ungültige Attributwerte hinweist. Diese Fehlermeldung wird vom Schnittstellenprogramm 20 an den Bedienrechner 12 weitergeleitet. Anschließend wird das Verfahren in einem Verfahrensschritt 664 beendet.

Wird im Verfahrensschritt 660 dagegen festgestellt, daß keine Wertebereichsüberschreitungen aufgetreten sind, so folgt unmittelbar nach dem Verfahrensschritt 660 ein Verfahrensschritt 666.

Im Verfahrensschritt 660 wird durch ein Anwenderprogramm 50 bzw. 28 eine Vorverarbeitung durchgeführt. Bei der Vorverarbeitung werden beispielsweise für ausschließlich intern genutzte Attribute Werte vorgegeben.

In einem folgenden Verfahrensschritt 668 wird geprüft, ob bei der Vorverarbeitung im Verfahrensschritt 666 Fehler aufgetreten sind. Ist dies der Fall, so folgt unmittelbar ein Verfahrensschritt 670, in dem an das Schnittstellenprogramm 20 eine Fehlermeldung weitergeleitet wird, in der als Fehler die fehlerhafte Vorverarbeitung angegeben ist. Das Schnittstellenprogramm 20 sendet an den Bedienrechner 12 eine Nachricht, welche auf den Fehler hinweist. Nach dem Verfahrensschritt 670 wird das Verfahren in einem Verfahrensschritt 672 beendet.

Wird im Verfahrensschritt 668 dagegen festgestellt, daß die Vorverarbeitung fehlerfrei verlaufen ist, so folgt unmittelbar nach dem Verfahrensschritt 668 ein Verfahrensschritt 674, in welchem die zu erzeugende Instanz in der Sprechereinheit 42 durch das Datenbank-Zugriffsprogramm 24 gespeichert wird. Für die oben genannte ERZEUGE-Anforderung wird die Instanz ER-1 erzeugt. Die Attribute dieser Instanz haben folgende Werte: A1-R = 11 und A2 = 4. Bei der betrachteten ERZEUGE-Anforderung handelt es sich um eine Anforderung, bei der ein Wert für das Namensattribut automatisch vorgegeben wird. Hier wird der Wert 11 gewählt, weil dieser Wert noch nicht im Datenbanksystem verwendet worden ist. Die automatische Vorgabe der Werte für das Namensattribut wird englisch als Automatic Instance Naming bezeichnet. Das Kennzeichen MOIA-ID der Instanz E-R-1 hat den Wert 2. Dieser Wert stimmt mit dem Wert des Kennzeichens MOIA-ID der zugehörigen Instanz MOIA-1 der Zugriffs-Objektklasse 152 überein.

In einem Verfahrensschritt 676 wird überprüft, ob beim Erzeugen der Instanz im Verfahrensschritt 674 Fehler aufgetreten sind. Bei der automatischen Vorgabe des Wertes für das Namensattribut können keine Fehler auftreten. Fehler können jedoch bei ERZEUGE-Anforderungen auftreten, bei denen ein Wert für das Namensattribut durch eine Bedienperson vorgegeben worden ist. Wird im Verfahrensschritt 676 festgestellt, daß ein Fehler aufgetreten ist, so wird in einem Verfahrensschritt 678 eine Fehlermeldung an das Schnittstellenprogramm 20 gesendet, die angibt, daß es bereits eine Instanz gibt, die der zu erzeugenden Instanz entspricht. Das Schnittstellenprogramm 20 wertet diese Fehlermeldung aus und erzeugt eine Nachricht für den Bedienrechner 12. Anschließend wird das Verfahren im Verfahrensschritt 680 beendet.

Wird dagegen im Verfahrensschritt 676 festgestellt, daß die zu erzeugende Instanz ohne Fehler in der Speichereinheit 42 erzeugt werden konnte, so folgt unmittelbar nach dem Verfahrensschritt 676 ein Verfahrensschritt 682. Im Verfahrensschritt 682 erfolgt durch ein Anwenderprogramm 50, 28 eine Nachbearbeitung. Beispielsweise werden während der Nachbearbeitung durch das Anwenderprogramm andere Anwenderprogramme aufgerufen.

In einem Verfahrensschritt 684 werden die Werte der Attribute für eine Bestätigungsnachricht ermittelt. Die mit Hilfe der Instanz ACC-0 zurückgewandelten Attributwerte werden an das Schnittstellenprogramm 20 übermittelt. In einem Verfahrensschritt 686 erzeugt das Schnittstellenprogramm 20 eine Antwort für den Bedienrechner 12, in welcher die Werte der Attribute angegeben sind. In einem Verfahrensschritt 688 wird das Verfahren beendet.

## Patentansprüche

1. Verfahren zum Zugriff auf eine Speichereinheit (42), bei dem eine Datenverarbeitungsanlage (10) eine Anforderung bearbeitet, in der Namensattribute (A0, A1) gemäß einem äußeren Datenmodell (100) enthalten sind, gemäß äußerem Datenmodell (100) für äußere Datensätze vorgegebener Datenstruktur ein äußeres Namensschema vorgegeben ist, mit dessen Hilfe ein äußerer Datensatz durch die Angabe übergeordneter äußerer Datensätze bezeichnet wird,
innere Datensätze (C-R-1, E-R-1 bis E-R-3) in einer digitalen Speichereinheit (42) gespeichert werden, für verschiedene Positionen im äußeren Namensschema jeweils ein Beschreibungsdatensatz (156, MOCD-C, MOCD-E) gespeichert wird, der Angaben (314) für den Zugriff auf innere Datensätze und Angaben (LDN-ID-SEQ) über die seine Position im Namensschema angebenden Namensattribute (A0, A1) enthält,
Beschreibungsdatensätze (MOCD-E) ermittelt werden, die Namensattribute (A0, A1) enthalten, die mit den in der Anforderung angegebenen Namensattributen (A0, A1) übereinstimmen, mit Hilfe der in einem ermittelten Beschreibungsdatensatz (MOCD-E) enthaltenen Angaben (314) für den Zugriff und mit Hilfe von in der Anforderung enthaltenen Angaben ein Lesezugriff auf die Speichereinheit (42) erfolgt, und bei dem für die Bearbeitung der Anforderung der Beschreibungsdatensatz (MOCD-E) ausgewählt wird, bei dem ein erfolgreicher Lesezugriff auf einen inneren Datensatz (E-R-3) durchgeführt werden konnte.

2. Verfahren nach Anspruch 1,
dadurch **gekennzeichnet,** daß ein Beschreibungsdatensatz (MOCD-E) ein Verweisdatum (SUP-MOCD-RF) enthält, mit dem auf einen Beschreibungsdatensatz (MOCD-C) verwiesen wird, dessen Position im Namensschema oberhalb der Position des das Verweisdatum (SUP-MOCD-RF) enthaltenden Beschreibungsdatensatzes (MOCD-E) liegt.

3. Verfahren nach einem der vorhergehenden Ansprüche,
dadurch **gekennzeichnet,** daß gemäß einem inneren Datenmodell (102) für die inneren Datensätze ein inneres Namensschema vorgegeben ist, mit dessen Hilfe ein innerer Datensatz durch die Angabe übergeordneter innerer Datensätze bezeichnet werden kann, und/oder daß die Angaben in einem Beschreibungsdatensatz mehrere innere Datensätze betreffen, und/oder daß die Angaben in verschiedenen Beschreibungsdatensätzen denselben inneren Datensatz betreffen.

4. Verfahren nach einem der vorhergehenden Ansprüche,
dadurch **gekennzeichnet,** daß die äußeren Datensätze äußere Attributwerte (A1=1) und die inneren Datensätze innere Attributwerte (A1-R=11) enthalten,
daß mit Hilfe eines Beschreibungsdatensatzes (MOCD-E) äußere Attributwerte (A1=1) in innere Attributwerte (A1-R=11) umgewandelt werden, und/oder daß innere Attributwerte (A1-R=11) mit Hilfe eines Beschreibungsdatensatzes (MOCD-E) in äußere Attributwerte (A1=1) umgewandelt werden.

5. Programm für den Zugriff auf einen Speichereinheit (42), mit einer durch den Prozessor einer Datenverarbeitungsanlage (10) ausführbaren Befehlsfolge,
dadurch **gekennzeichnet,** daß die Datenverarbeitungsanlage (10) beim Ausführen der Befehlsfolge veranlaßt wird, die Verfahrensschritte gemäß einem der Ansprüche 1 bis 4 auszuführen.

6. Datenverarbeitungsanlage (10) für den Zugriff auf eine Speichereinheit (42), mit einem Prozessor und mit einer Speichereinheit,
dadurch **gekennzeichnet,** daß in der Speichereinheit ein Programm gespeichert ist, bei dessen Ausführung durch den Prozessor die Verfahrensschritte nach einem der Ansprüche 1 bis 4 ausgeführt werden.

7. Verfahren zum Zugriff auf eine Speichereinheit (42), bei dem eine Datenverarbeitungsanlage (10) eine Anforderung bearbeitet, in der Attribute (A2, A3) gemäß einem äußeren Datenmodell (100) enthalten sind,gemäß äußerem Datenmodell (100) mehrere Varianten (V1 bis V4) mit verschiedenen Attributen (A1 bis A5) für eine Datenstruktur an einer Position eines äußeren Namensschema auftreten können, mit dessen Hilfe ein äußerer Datensatz durch Angabe übergeordneter äußerer Datensätze bezeichnet wird, innere Datensätze (E-R-1 bis E-R-3) in einer digitalen Speichereinheit (42) gespeichert werden, für verschiedene Varianten (V1, V2) einer Datenstruktur jeweils ein Variantendatensatz (PCV-V1, PCV-V2) gespeichert wird, der Angaben (250) über die Attribute (A1, A2) der Variante (V1) enthält, vor der Bearbeitung der Anforderung ein Variantendatensatz (PCV-V1, PCV-V2) mit Hilfe eines Vergleichs der in der Anforderung enthaltenen Attribute (A2, A3) und der im Variantendatensatz (PCV-V1, PCV-V2) enthaltenen Attribute (A1, A2) ausgewählt wird,
und bei dem die Anforderung unter Verwendung des ausgewählten Variantendatensatzes (PCV-V1) bearbeitet wird, wobei auf einen inneren Datensatz (E-R-1) zugegriffen wird.

8. Verfahren nach Anspruch 7,
dadurch **gekennzeichnet,** daß der ausgewählte Variantendatensatz (PCV-V1) Angaben (MOCD-ID) für den Zugriff auf den inneren Datensatz (E-R-1) enthält.

9. Verfahren nach Anspruch 7,
dadurch **gekennzeichnet,** daß für verschiedene Positionen im äußeren Namensschema jeweils ein Beschreibungsdatensatz (MOCD-C, MOCD-E) gespeichert wird, der Angaben für den Zugriff auf die inneren Datensätze (C-R-1, E-R-1 bis E-R-3) enthält, und daß ein Variantendatensatz (PCV-V1) ein Verweisdatum (MOCD-ID) auf den Beschreibungsdatensatz (MOCD-E) enthält, der die gleiche Position im Namensschema hat wie die durch den Variantendatensatz (PCV-V1) beschriebene Variante (V1).

10. Verfahren nach einem der Ansprüche 7 bis 9,
dadurch **gekennzeichnet,** daß der Variantendatensatz ein Prioritätsdatum (252) enthält, das eine Priorität angibt, und daß ein Variantendatensatz (PCV-V1) an Hand des Prioritätsdatums (252) ausgewählt wird.

11. Verfahren nach einem der Ansprüche 7 bis 10,
dadurch **gekennzeichnet,** daß der Variantendatensatz (PCV-V1) ausgewählt wird, der die meisten mit den Attributen (A2, A3) der Anforderung übereinstimmenden Attribute hat.

12. Programm für den Zugriff auf eine Speichereinheit (42), mit einer durch den Prozessor einer Datenverarbeitungsanlage (10) ausführbaren Befehlsfolge,
dadurch **gekennzeichnet,** daß die Datenverarbeitungsanlage (10) beim Ausführen der Befehlsfolge veranlaßt wird, die Verfahrensschritte gemäß einem der Ansprüche 7 bis 11 auszuführen.

13. Datenverarbeitungsanlage (10) für den Zugriff auf eine Speichereinheit (42), mit einem Prozessor und mit einer Speichereinheit,
dadurch **gekennzeichnet,** daß in der Speichereinheit ein Programm gespeichert ist, bei dessen Ausführung durch den Prozessor die Verfahrensschritte nach einem der Ansprüche 7 bis 11 ausgeführt werden.

14. Verfahren zum Zugriff auf eine Speichereinheit (42), bei dem eine Datenverarbeitungsanlage (10) eine Anforderung bearbeitet, in der äußere Attributwerte (A1=1) für in einem äußeren Datenmodell (100) festgelegte Attribute (A1) enthalten sind, innere Datensätze (E-R-1) mit inneren Attributwerten (A1-R=11) in einer digitalen Speichereinheit (42) gespeichert werden, und bei dem Umwandlungsdatensätze (ACC-0) gespeichert werden, die für äußere Attribute (A1) Angaben (350) darüber enthalten, welche inneren Attribute (A1-R) zur Speicherung der äußeren Attribute (A1) verwendet werden und wie die Werte der äußeren Attribute (A1) in Werte innerer Attribute (A1-R) umzuwandeln sind.

15. Verfahren nach Anspruch 14,
dadurch **gekennzeichnet,** daß im Umwandlungsdatensatz (ACC-0) ein Verweis auf ein Anwenderprogramm (26) gespeichert ist, welches die Werte der Attribute (A1, A1-R) umwandelt.

16. Programm für den Zugriff auf eine Speichereinheit (42), mit einer durch den Prozessor einer Datenverarbeitungsanlage (10) ausführbaren Befehlsfolge,
dadurch **gekennzeichnet,** daß die Datenverarbeitungsanlage (10) beim Ausführen der Befehlsfolge veranlaßt wird, die Verfahrensschritte gemäß Anspruch 14 oder 15 auszuführen.

17. Datenverarbeitungsanlage (10) für den Zugriff auf eine Speichereinheit (42), mit einem Prozessor und mit einer Speichereinheit,
dadurch **gekennzeichnet,** daß in der Speichereinheit ein Programm gespeichert ist, bei dessen Ausführung durch den Prozessor die Verfahrensschritte nach Anspruch 14 oder 15 ausgeführt werden.

18. Verfahren zum Zugriff auf eine Speichereinheit (42), bei dem in einer digitalen Speichereinheit (42) innere Datensätze (E-R-1 bis E-R-3) vorgegebener Datenstruktur zusammen mit einem inneren Kennzeichen (MOIA-ID) gespeichert werden, das innere Kennzeichen (MOIA-ID) weiterhin separat vom bezeichneten inneren Datensatz (E-R-1) in einem Zugriffsdatensatz (MOIA-1) gespeichert wird, mit dessen Hilfe sich die Datenstruktur des inneren Datensatzes (E-R-1) ermitteln läßt, beim Zugriff auf einen inneren Datensatz (E-R-1) zunächst mit Hilfe des inneren Kennzeichens (MOIA-ID) im Zugriffsdatensatz (MOIA-1) die Datenstruktur des durch das Kennzeichen (MOIA-ID) bezeichneten inneren Datensatzes (E-R-1) ermittelt wird,
und bei dem danach mit Hilfe des inneren Kennzeichens (MOIA-ID) und der ermittelten Datenstruktur auf den inneren Datensatz (E-R-1) zugegriffen wird.

19. Verfahren nach Anspruch 18,
dadurch **gekennzeichnet,** daß eine Datenverarbeitungsanlage (10) eine Anforderung bearbeitet, in der auf ein äußeres Datenmodell (100) Bezug genommen wird,
gemäß äußerem Datenmodell (100) für äußere Datensätze vorgegebener Datenstruktur ein Namensschema vorgegeben ist, mit dessen Hilfe ein äußerer Datensatz durch die Angabe von Kennzeichen übergeordneter äußerer Datensätze bezeichnet wird, daß die inneren Kennzeichen (MOIA-ID) keinen Bezug zu übergeordneten Datensätzen haben, daß beim Bearbeiten einer Anforderung eine Bezeichnung gemäß Namensschema in ein inneres Kennzeichen (MOIA-ID) umgewandelt wird, und daß auf die Daten des inneren Datensatzes (E-R-1) mit Hilfe des inneren Kennzeichens (MOIA-ID) bei der Bearbeitung der Anforderung zugriffen wird.

20. Verfahren nach Anspruch 18 oder 19,
dadurch **gekennzeichnet,** daß für die inneren Datensätze gemäß einem inneren Datenmodell (102) ein Namensschema vorgegeben ist, mit dessen Hilfe ein innerer Datensatz durch die Angabe von Kennzeichen übergeordneter innerer Datensätze bezeichnet wird.

21. Verfahren nach einem der Ansprüche 18 bis 20,
dadurch **gekennzeichnet,** daß das innere Datenmodell (102) ein anderes Namensschema als das äußere Datenmodell (100) hat, und/oder daß für Datensätze an einander entsprechenden Positionen des äußeren Datenmodells (100) und des inneren Datenmodells (102) voneinander abweichende Datenstrukturen vorgegeben sind.

22. Verfahren nach einem der Ansprüche 18 bis 21,
dadurch **gekennzeichnet,** daß das eindeutige Kennzeichen (MOIA-ID) in einem Datum des durch das Kennzeichen (MOIA-ID) bezeichneten inneren Datensatzes (E-R-1) gespeichert wird.

23. Programm für den Zugriff auf eine Speichereinheit (42), mit einer durch den Prozessor einer Datenverarbeitungsanlage ausführbaren Befehlsfolge,
dadurch **gekennzeichnet,** daß die Datenverarbeitungsanlage beim Ausführen der Befehlsfolge veranlaßt wird, die Verfahrensschritte gemäß einem der Patentansprüche 18 bis 22 durchzuführen.

24. Datenverarbeitungsanlage (10) für den Zugriff auf eine Speichereinheit (42), mit einem Prozessor und mit einer Speichereinheit,
dadurch **gekennzeichnet,** daß in der Speichereinheit ein Programm gespeichert ist, bei dessen Ausführung durch den Prozessor die Verfahrensschritte nach einem der Patentansprüche 18 bis 22 ausgeführt werden.
